(19) Europäisches Patentamt
European Patent Office
Office européen des brevets

(11) **EP 4 470 669 A1**

(12) **EUROPEAN PATENT APPLICATION**
published in accordance with Art. 153(4) EPC

(43) Date of publication:
04.12.2024 Bulletin 2024/49

(21) Application number: 23746767.5

(22) Date of filing: 18.01.2023

(51) International Patent Classification (IPC):
$B01J\ 39/07^{(2017.01)}$    $B01J\ 41/07^{(2017.01)}$
$B01J\ 47/14^{(2017.01)}$    $B01J\ 49/53^{(2017.01)}$
$B01J\ 49/57^{(2017.01)}$    $C02F\ 1/42^{(2023.01)}$
$C02F\ 1/461^{(2023.01)}$

(52) Cooperative Patent Classification (CPC):
B01J 39/07; B01J 41/07; B01J 47/14; B01J 49/53;
B01J 49/57; C02F 1/42; C02F 1/461

(86) International application number:
PCT/JP2023/001269

(87) International publication number:
WO 2023/145553 (03.08.2023 Gazette 2023/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.01.2022 JP 2022011395
28.07.2022 JP 2022120072

(71) Applicant: Panasonic Intellectual Property
Management Co., Ltd.
Osaka-shi, Osaka 540-6207 (JP)

(72) Inventors:
• LU, Yujun
Kadoma-shi, Osaka 571-0057 (JP)
• ISHIKAWA, Hiroki
Kadoma-shi, Osaka 571-0057 (JP)
• MARUO, Yuko
Kadoma-shi, Osaka 571-0057 (JP)

(74) Representative: Grünecker Patent- und
Rechtsanwälte
PartG mbB
Leopoldstraße 4
80802 München (DE)

(54) **WATER-SOFTENING DEVICE**

(57) Water-softening device (1) of the present disclosure includes water-softening tank (4) that performs a water-softening treatment on raw water containing a hardness component with weakly acidic cation exchange resin (9) to generate acidic soft water, neutralization tank (5) that neutralizes a pH of the acidic soft water generated by passing through water-softening tank (4) with weakly basic anion exchange resin (10) to generate neutralized soft water, soft water detector (6) that detects an electrical conductivity of the neutralized soft water generated by passing through neutralization tank (5), acquisition unit (17) that acquires a first electrical conductivity corresponding to an ion other than the hardness component in the raw water, correction unit (18) that corrects the electrical conductivity of the neutralized soft water based on the first electrical conductivity acquired by acquisition unit (17) to output a second electrical conductivity, and calculator (19) that calculates hardness component information based on the second electrical conductivity.

FIG. 1

**Description**

TECHNICAL FIELD

The present disclosure relates to a water-softening device.

BACKGROUND ART

In a water-softening device of the related art using a weakly acidic cation exchange resin, a method for regenerating a cation exchange resin with acidic electrolytic water generated by electrolysis is known as a method for regenerating a cation exchange resin without using salt (see, for example, PTL 1). The weakly acidic cation exchange resin has hydrogen ions at a terminal of a functional group, and softens raw water by exchanging hardness components (for example, calcium ions and magnesium ions) in the raw water with the hydrogen ions.

Citation List

Patent Literature

PTL 1: Unexamined Japanese Patent Publication No. 2011-30973

SUMMARY OF THE INVENTION

In such a water-softening device of the related art, it is required to detect hardness of soft water in order to grasp whether or not softening is appropriately progressing. In order to detect the hardness, it is conceivable to measure an electrical conductivity of water. However, in the water-softening device of the related art, soft water to be taken out contains ions other than the hardness components, such as sodium ions or chloride ions derived from the raw water, in addition to the hardness components. Furthermore, during a water-softening treatment, the hardness components and ions other than the hardness components have different a behavior of a concentration change. Thus, even the soft water having the same electrical conductivity may have different ion concentration ratios. Thus, there is a problem that it is difficult to accurately calculate the hardness in the soft water from the electrical conductivity of the soft water to be taken out.
An object of the present disclosure is to provide a water-softening device capable of more accurately calculating hardness of soft water from an electrical conductivity of the soft water.
A water-softening device according to the present disclosure includes a water-softening tank, a neutralization tank, a soft water detector, an acquisition unit, a correction unit, and a calculator. The water-softening tank softens raw water containing a hardness component with a weakly acidic cation exchange resin to generate acidic soft water. The neutralization tank neutralizes a pH of the acidic soft water generated by passing through the water-softening tank with a weakly basic anion exchange resin to generate neutralized soft water. The soft water detector detects an electrical conductivity of the neutralized soft water generated by passing through the neutralization tank. The acquisition unit acquires an electrical conductivity corresponding to an ion other than the hardness component in the raw water. The correction unit corrects the electrical conductivity of the neutralized soft water based on the electrical conductivity acquired by the acquisition unit to output a second electrical conductivity. The calculator calculates hardness component information based on the second electrical conductivity.
In accordance with the present disclosure, it is possible to provide the water-softening device capable of more accurately calculating the concentration of the hardness component from the electrical conductivity of the soft water.

BRIEF DESCRIPTION OF THE DRAWINGS

Fig. 1 is a conceptual diagram illustrating a configuration of a water-softening device according to a first exemplary embodiment of the present disclosure.
Fig. 2 is a configuration diagram illustrating a circulation flow path of the water-softening device according to the first exemplary embodiment and a second exemplary embodiment of the present disclosure.
Fig. 3 is a diagram illustrating a state of the water-softening device according to the first exemplary embodiment and the second exemplary embodiment of the present disclosure during an operation.
Fig. 4 is a conceptual diagram illustrating a configuration of the water-softening device according to the second exemplary embodiment of the present disclosure.
Fig. 5 is a diagram illustrating a change in electrical conductivity during water-softening by the water-softening device according to the second exemplary embodiment of the present disclosure.

Fig. 6 is a conceptual diagram illustrating a water-softening device according to a third exemplary embodiment of the present disclosure.

Fig. 7 is a diagram illustrating a state of each component during a resin regeneration treatment of the water-softening device according to the third exemplary embodiment of the present disclosure.

Fig. 8 is a diagram illustrating a state of the water-softening device according to the third exemplary embodiment of the present disclosure during an operation.

Fig. 9 is a functional block diagram illustrating each configuration of a controller of the water-softening device according to the third exemplary embodiment of the present disclosure.

Fig. 10 is a diagram illustrating a change in electrical conductivity of soft water by the water-softening device according to the third exemplary embodiment of the present disclosure.

Fig. 11 is a diagram illustrating the change in ion concentration of the soft water by the water-softening device according to the third exemplary embodiment of the present disclosure.

## DESCRIPTION OF EMBODIMENTS

A water-softening device according to the present disclosure includes a water-softening tank, a neutralization tank, a raw water detector, a soft water detector, an acquisition unit, a correction unit, a calculator, and a display. The water-softening tank softens raw water containing a hardness component with a weakly acidic cation exchange resin to generate acidic soft water. The neutralization tank neutralizes a pH of the soft water having passed through the water-softening tank with a weakly basic anion exchange resin to generate neutralized soft water. The raw water detector detects an electrical conductivity of the raw water. The soft water detector detects an electrical conductivity of the neutralized soft water having passed through the water-softening tank and the neutralization tank. The acquisition unit acquires an electrical conductivity corresponding to an ion other than the hardness component in the raw water. The correction unit corrects the electrical conductivity obtained by the soft water detector based on the electrical conductivity corresponding to the ion other than the hardness component in the raw water acquired by the acquisition unit to generate a second electrical conductivity. The calculator calculates hardness of the neutralized soft water based on the second electrical conductivity output by the correction unit. The display gives a notification about the hardness of the neutralized soft water calculated by the calculator. The water-softening device is configured such that the raw water is distributed through the raw water detector, the water-softening tank, the neutralization tank, and the soft water detector in this order.

In accordance with such a configuration, the electrical conductivity of the raw water is acquired by the raw water detector, and constant correction (multiplication by a predetermined value or the like) is performed on the electrical conductivity of the raw water by the acquisition unit. As a result, the electrical conductivity (first electrical conductivity) corresponding to the ion component other than the hardness component can be acquired, the electrical conductivity (second electrical conductivity) obtained by correcting the electrical conductivity of the soft water detected by the soft water detector based on the electrical conductivity corresponding to the ion component other than the hardness component can be acquired in the correction unit, and the hardness component in the soft water can be calculated from the second electrical conductivity in the calculator. Accordingly, as compared with the water-softening device of the related art, even in a case where hard water in which hardness components and other ion components are mixed is distributed, it is possible to calculate the hardness component in the soft water from the electrical conductivities of the hard water and the soft water obtained by distributing the hard water.

Furthermore, the water-softening device according to the present disclosure may further include an electrolytic tank that generates acidic electrolytic water for regenerating the weakly acidic cation exchange resin in the water-softening tank and alkaline electrolytic water for regenerating the weakly basic anion exchange resin in the neutralization tank, and a treatment tank that mixes the acidic electrolytic water distributed through the water-softening tank and the alkaline electrolytic water distributed through the neutralization tank and supplies the mixture to the electrolytic tank. In accordance with such a configuration, the weakly acidic cation exchange resin can be regenerated by the acidic electrolytic water generated in the electrolytic tank, and the weakly basic anion exchange resin can be regenerated by the alkaline electrolytic water. Thus, the maintenance frequency of the water-softening device can be reduced, and the water-softening device can be used for a long period of time.

Hereinafter, exemplary embodiments of the present disclosure will be described with reference to the drawings. Note that, the following exemplary embodiments are examples embodying the present disclosure, and do not limit the technical scope of the present disclosure. Furthermore, the respective drawings explained in the exemplary embodiments are schematic representations, and the ratios of the sizes and the thicknesses of the components in each of the drawings do not necessarily reflect the actual dimensional ratios.

(First exemplary embodiment)

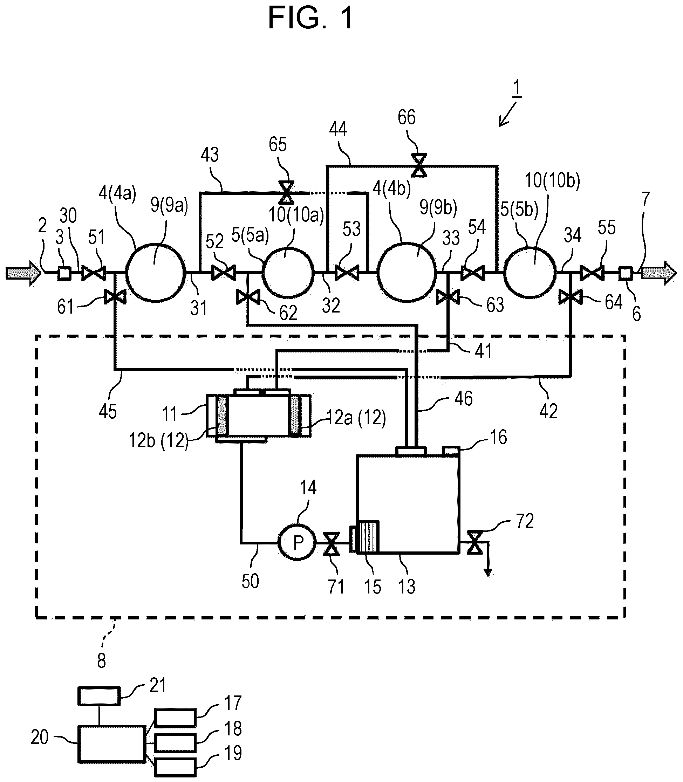

Water-softening device 1 according to a first exemplary embodiment of the present disclosure will be described with reference to Fig. 1. Fig. 1 is a conceptual diagram illustrating a configuration of water-softening device 1 according to the first exemplary embodiment of the present disclosure. Note that, Fig. 1 conceptually illustrates each element of water-softening device 1.

<Overall configuration>

Water-softening device 1 is a device that generates neutral soft water from raw water containing hardness components supplied from an outside. Note that, the raw water is water (water to be treated) introduced into the device from inlet port 2, and is, for example, city water or well water. The raw water includes hardness components (for example, calcium or magnesium ions).

Specifically, as illustrated in Fig. 1, water-softening device 1 includes inlet port 2, raw water detector 3, water-softening tank 4, neutralization tank 5, soft water detector 6, water intake port 7, regeneration device 8, acquisition unit 17, correction unit 18, calculator 19, controller 20, and display 21. Furthermore, water-softening device 1 includes a plurality of opening and closing valves (opening and closing valve 51 to opening and closing valve 55, opening and closing valve 61 to opening and closing valve 66, opening and closing valve 71, and opening and closing valve 72). Details of these opening and closing valves will be described later.

Inlet port 2 is connected to a supply source of the raw water and flow path 30. Inlet port 2 is an opening through which the raw water is introduced into the device.

Water intake port 7 is an opening through which the neutral soft water treated by water-softening tank 4 and neutralization tank 5 is discharged to an outside of the device. In water-softening device 1, soft water after a water-softening treatment can be taken out from water intake port 7 by a pressure of the raw water flowing in from inlet port 2.

Flow path 30, flow path 31, flow path 32, flow path 33, and flow path 34 connect from inlet port 2 to water intake port 7.

Flow path 30 is a flow path connecting from inlet port 2 to first water-softening tank 4a. That is, flow path 30 is a flow path for guiding the raw water containing the hardness components from inlet port 2 to first water-softening tank 4a.

Flow path 31 is a flow path connecting from first water-softening tank 4a to first neutralization tank 5a. That is, flow path 31 is a flow path for guiding the water on which the water-softening treatment is performed in first water-softening tank 4a to first neutralization tank 5a.

Flow path 32 is a flow path connecting from first neutralization tank 5a to second water-softening tank 4b. That is, flow path 32 is a flow path for guiding the water on which the neutralization is performed in first neutralization tank 5a to second water-softening tank 4b.

Flow path 33 is a flow path connecting from second water-softening tank 4b to second neutralization tank 5b. That is, flow path 33 is a flow path for guiding the water on which the water-softening treatment is performed in second water-softening tank 4b to second neutralization tank 5b.

Flow path 34 is a flow path connecting from second neutralization tank 5b to water intake port 7. That is, flow path 34 is a flow path for guiding the soft water on which the neutralization is performed by second neutralization tank 5b to water intake port 7.

In summary, in water-softening device 1, in the water-softening treatment, the raw water supplied from the outside is distributed through inlet port 2, flow path 30, first water-softening tank 4a, flow path 31, first neutralization tank 5a, flow path 32, second water-softening tank 4b, flow path 33, second neutralization tank 5b, flow path 34, and water intake port 7 in this order, and is discharged as the neutral soft water.

<Water-softening tank>

Water-softening tank 4 softens the raw water containing the hardness components by an action of weakly acidic cation exchange resin 9. Specifically, since water-softening tank 4 exchanges cations (calcium ion and magnesium ion), which are the hardness components contained in water (raw water) to be distributed, with hydrogen ions, the hardness of the raw water decreases and the raw water is softened. Water-softening tank 4 includes weakly acidic cation exchange resin 9 having the hydrogen ions at a terminal of a functional group.

Water-softening tank 4 is configured by, for example, filling a cylindrical container with weakly acidic cation exchange resin 9.

Water-softening tank 4 is configured by including first water-softening tank 4a and second water-softening tank 4b.

First water-softening tank 4a is filled with first weakly acidic cation exchange resin 9a. Second water-softening tank 4b is filled with second weakly acidic cation exchange resin 9b. Furthermore, desirably, first water-softening tank 4a and second water-softening tank 4b have weakly acidic cation exchange resins 9 which have substantially the same flow path lengths, the same flow path sectional areas, and the same volumes. Note that, hereinafter, first weakly acidic cation exchange resin 9a and second weakly acidic cation exchange resin 9b will be described as weakly acidic cation exchange resin 9 unless it is particularly necessary to distinguish between these resins.

Weakly acidic cation exchange resin 9 is the ion exchange resin having the hydrogen ion at the terminal of the functional group. Weakly acidic cation exchange resin 9 adsorbs cations (calcium ion and magnesium ion), which are the hardness components contained in the raw water to be passed, and releases the hydrogen ions. Since the terminal of the functional group of weakly acidic cation exchange resin 9 has the hydrogen ion, weakly acidic cation exchange resin 9 can be regenerated by using acidic electrolytic water in a regeneration treatment to be described later. At this time, cations, which are the hardness components taken in during the water-softening treatment, are released from weakly acidic cation exchange resin 9.

Weakly acidic cation exchange resin 9 is not particularly limited, and weakly acidic cation exchange resins for general purposes can be used. Examples thereof include a resin having a carboxyl group (-COOH) as an exchange group. Furthermore, a resin in which a hydrogen ion ($H^+$) of a carboxyl group is a cation such as a metal ion or an ammonium ion ($NH4^+$) may also be used.

<Neutralization tank>

Neutralization tank 5 neutralizes pH (hydrogen ion concentration index) of the soft water (acidified soft water) containing the hydrogen ions coming out of water-softening tank 4 by an action of weakly basic anion exchange resin 10 to obtain the neutral soft water. Specifically, since neutralization tank 5 adsorbs the hydrogen ions contained in the soft water from water-softening tank 4 together with anions (negative ions), the pH of the soft water increases, and the neutral soft water can be obtained. Furthermore, weakly basic anion exchange resin 10 can be regenerated by using alkaline electrolytic water in the regeneration treatment to be described later. Neutralization tank 5 includes weakly basic anion exchange resin 10.

Neutralization tank 5 is configured by, for example, filling a cylindrical container with weakly basic anion exchange resin 10.

Neutralization tank 5 is configured by including first neutralization tank 5a and second neutralization tank 5b.

First neutralization tank 5a is configured by, for example, filling a cylindrical container with first weakly basic anion exchange resin 10a. Second neutralization tank 5b is filled with second weakly basic anion exchange resin 10b. Furthermore, desirably, first neutralization tank 5a and second neutralization tank 5b have weakly basic anion exchange resins 10 which have substantially the same flow path lengths, the same flow path sectional areas, and the same volumes. Note that, hereinafter, first weakly basic anion exchange resin 10a and second weakly basic anion exchange resin 10b will be described as weakly basic anion exchange resin 10 unless it is particularly necessary to distinguish between these resins.

Weakly basic anion exchange resin 10 neutralizes the hydrogen ions contained in the water to be passed to generate the neutral water. Weakly basic anion exchange resin 10 is not particularly limited, and weakly basic anion exchange resins for general purposes can be used. Examples thereof include a resin in free-base ion form.

<Raw water detector>

Raw water detector 3 is provided in flow path 30, and detects an electrical conductivity (raw water electrical conductivity) of the raw water containing the hardness components supplied from inlet port 2 and distributing through flow path 30. Raw water detector 3 is connected to be able to communicate with acquisition unit 17 and controller 20 to be described later in a wireless or wired manner. Information on the detected raw water electrical conductivity is used as input signals of acquisition unit 17 and controller 20. As raw water detector 3, a general-purpose detector can be used as long as the detector measures an electrical conductivity of a liquid.

Here, water is an insulator that almost does not conduct electricity in the case of pure water, but various substances are dissolved (ionized) to the water to make it easy to conduct electricity. That is, the electrical conductivity of the liquid is an index of the amount of ionized substances contained in the liquid. In general raw water, an electrical conductivity is proportional to a content of ions contained in a large amount in river water or groundwater as a water source of the raw water. Examples of the ions contained in the general raw water include calcium ions, magnesium ions, sodium ions, and potassium ions for the cations, and chloride ions, nitrate ions, and sulfate ions for the anions.

<Soft water detector>

Soft water detector 6 is provided in flow path 34, and detects an electrical conductivity of the neutral soft water (electrical conductivity of soft water) flowed out of second neutralization tank 5b. Soft water detector 6 is connected to be able to communicate with acquisition unit 17 and controller 20 to be described later in a wireless or wired manner. Information on the detected electrical conductivity of the soft water is used as input signals of acquisition unit 17 and controller 20. As soft water detector 6, a general-purpose detector can be used as long as the detector measures the electrical conductivity of the liquid. For example, an AC two-electrode system, an AC four-electrode system, and an electromagnetic induction system may be used.

<Regeneration device>

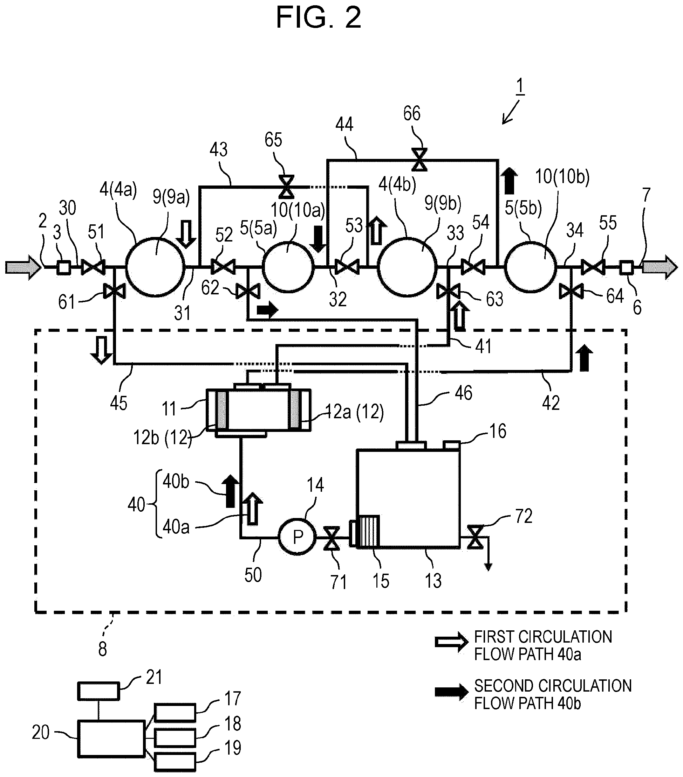

Regeneration device 8 is a device that regenerates weakly acidic cation exchange resin 9 in water-softening tank 4 and regenerates weakly basic anion exchange resin 10 in neutralization tank 5. Furthermore, regeneration device 8 includes electrolytic tank 11, treatment tank 13, and water pump 14. In regeneration device 8, first supply flow path 41, first collection flow path 45, second supply flow path 42, and second collection flow path 46 are connected to flow path 33, flow path 30, flow path 34, and flow path 31 from inlet port 2 to water intake port 7, respectively. Furthermore, flow path 31 and flow path 32 are connected by first bypass flow path 43. Furthermore, flow path 32 and flow path 33 are connected by second bypass flow path 44. Each flow path constitutes circulation flow path 40 (first circulation flow path 40a or second circulation flow path 40b) to be described later with reference to Fig. 2.

Here, first supply flow path 41 is a flow path for supplying the acidic electrolytic water from electrolytic tank 11 to second water-softening tank 4b.

First bypass flow path 43 is a flow path for supplying the acidic electrolytic water distributed through second water-softening tank 4b to first water-softening tank 4a while bypassing first neutralization tank 5a.

First collection flow path 45 is a flow path for collecting the acidic electrolytic water containing the hardness components having passed through first water-softening tank 4a into treatment tank 13.

Second supply flow path 42 is a flow path for supplying the alkaline electrolytic water from electrolytic tank 11 to second neutralization tank 5b.

Second bypass flow path 44 is a flow path for supplying the alkaline electrolytic water distributed through second neutralization tank 5b to first neutralization tank 5a while bypassing second water-softening tank 4b.

Second collection flow path 46 is a flow path for collecting the alkaline electrolytic water having passed through first neutralization tank 5a into treatment tank 13.

<Electrolytic tank>

Electrolytic tank 11 generates the acidic electrolytic water and the alkaline electrolytic water by electrolyzing the flowing water (water supplied from treatment tank 13) by using electrodes 12 (electrode 12a and electrode 12b) provided inside, and discharges the acidic electrolytic water and the alkaline electrolytic water. More specifically, in electrode 12a serving as an anode during the electrolysis, the hydrogen ions are generated by electrolysis, and the acidic electrolytic water is generated. Furthermore, in electrode 12b serving as a cathode during the electrolysis, the hydroxide ions are generated by electrolysis, and the alkaline electrolytic water is generated. Electrolytic tank 11 supplies the acidic electrolytic water to second water-softening tank 4b via first supply flow path 41. Furthermore, electrolytic tank 11 supplies the alkaline electrolytic water to second neutralization tank 5b via second supply flow path 42. Although details will be described later, the acidic electrolytic water generated by electrolytic tank 11 is used for regenerating first weakly acidic cation exchange resin 9a in first water-softening tank 4a and second weakly acidic cation exchange resin 9b in second water-softening tank 4b. Furthermore, the alkaline electrolytic water generated by electrolytic tank 11 is used for regenerating first weakly basic anion exchange resin 10a in first neutralization tank 5a and second weakly basic anion exchange resin 10b in second neutralization tank 5b. Note that, electrolytic tank 11 is configured such that an energization state to electrodes 12 can be controlled by controller 20 to be described later.

<Treatment tank>

Treatment tank 13 is a tank or a container including air bleed valve 16. Treatment tank 13 secures and stores water to be distributed in circulation flow path 40 (see Fig. 2) when weakly acidic cation exchange resin 9 and weakly basic anion exchange resin 10 are regenerated. Furthermore, treatment tank 13 mixes the acidic electrolytic water containing the hardness components distributed through water-softening tank 4 and the alkaline electrolytic water containing the anions distributed through neutralization tank 5, and supplies the mixture to electrolytic tank 11.

In treatment tank 13, a reaction product (reaction product originating from the hardness components contained in the raw water) is generated by reaction between the mixed hardness components and alkaline electrolytic water. More specifically, the acidic electrolytic water containing the hardness components after weakly acidic cation exchange resin 9 in water-softening tank 4 is regenerated is passed to treatment tank 13 via first collection flow path 45. Furthermore, the alkaline electrolytic water containing the anions (for example, chloride ions and hydroxide ions) after weakly basic anion exchange resin 10 in neutralization tank 5 is regenerated is passed to treatment tank 13 via second collection flow path 46. In treatment tank 13, the acidic electrolytic water containing the hardness components and the alkaline electrolytic water containing the anions are mixed, and thus, the hardness components react with the alkaline electrolytic water. For example, in a case where the hardness components in the acidic electrolytic water are the calcium ions, a reaction in which calcium carbonate is generated or calcium hydroxide is generated occurs by mixing the calcium ions with the alkaline electrolytic water. The reacted hardness components can be separated as the reaction product by filtration unit 15 to be described later, and treatment water can be obtained.

Note that, a case where "the hardness components react" includes not only a state where all the hardness components react but also a state where a component that does not react or a component that does not exceed a solubility product is contained in treatment tank 13.

The treatment water obtained by the reaction of the hardness components in treatment tank 13 is passed to electrolytic tank 11, is electrolyzed in electrolytic tank 11, and becomes the acidic electrolytic water and the alkaline electrolytic water. The acidic electrolytic water and the alkaline electrolytic water are supplied to water-softening tank 4 and neutralization tank 5, respectively. The acidic electrolytic water and the alkaline electrolytic water are reused in water-softening tank 4 and neutralization tank 5, respectively, and thereafter are passed to treatment tank 13 again. Accordingly, the acidic electrolytic water and the alkaline electrolytic water used for the regeneration of weakly acidic cation exchange resin 9 and the regeneration of weakly basic anion exchange resin 10 can be reused. In addition, since water in which the hardness components have reacted is reused, it is possible to suppress a reduction in regeneration efficiency when weakly acidic cation exchange resin 9 is regenerated.

<Water pump>

Water pump 14 is a device that distributes water through circulation flow path 40 (see Fig. 2) during the regeneration treatment by regeneration device 8. Water pump 14 is provided in water flow path 50 that communicatively connects between treatment tank 13 and electrolytic tank 11. Note that, water pump 14 is preferably disposed on an upstream side of electrolytic tank 11 and on a downstream side of treatment tank 13. Such a disposition is adopted because one water pump 14 can easily circulate water to first circulation flow path 40a and second circulation flow path 40b to be described later. Furthermore, water pump 14 is connected to be able to communicate with controller 20 to be described later in a wireless or wired manner. Examples of water pump 14 include a centrifugal pump capable of supplying a required flow rate of circulation flow path 40 to be described later during the regeneration treatment.

<Filtration unit>

Filtration unit 15 is provided at a front stage of water flow path 50 connected from treatment tank 13 to electrolytic tank 11. Filtration unit 15 separates a precipitate contained in the water distributed through treatment tank 13. The precipitate is a reaction product generated by the reaction between the acidic electrolytic water containing the hardness components distributed through water-softening tank 4 and the alkaline electrolytic water containing the anions distributed through neutralization tank 5.

The precipitate is separated by filtration unit 15, and thus, the treatment water distributing through water flow path 50 does not contain the precipitate. Thus, it is possible to prevent inflow of the precipitate into electrolytic tank 11, performance deterioration due to the adhesion of the precipitate to electrodes 12 and a membrane in electrolytic tank 11, and inflow of the precipitate into water-softening tank 4 and neutralization tank 5.

The form of filtration unit 15 is not limited as long as the reaction product from the hardness components in treatment tank 13 can be separated. For example, a form using a cartridge type filter, a filtration layer using a granular filter material, a cyclone type solid-liquid separator, a hollow fiber membrane, or the like can be mentioned.

<Opening and closing valve>

The plurality of opening and closing valves (opening and closing valve 51 to opening and closing valve 55, opening and closing valve 61 to opening and closing valve 66, opening and closing valve 71, and opening and closing valve 72) are provided in the respective flow paths, and are switched to an "open" state and a "closed" state in the respective flow paths. Furthermore, the plurality of opening and closing valves (opening and closing valve 51 to opening and closing valve 55, opening and closing valve 61 to opening and closing valve 66, opening and closing valve 71, and opening and closing valve 72) are connected to be able to communicate with controller 20 to be described later in a wireless or wired manner.

<Acquisition unit>

Acquisition unit 17 is connected to controller 20 to be described later, corrects the electrical conductivity of the raw water detected by raw water detector 3, and acquires an electrical conductivity (first electrical conductivity) corresponding to ions other than the hardness components in the raw water. Examples of the correction method include multiplication of the electrical conductivity of the raw water by a predetermined value. Here, the predetermined value is, for example, a proportion of the electrical conductivity corresponding to the ions other than the hardness components in the electrical conductivity of the raw water. The proportion of the electrical conductivity corresponding to the ions other than the hardness components in the electrical conductivity of the raw water varies depending on a country or region. This is because a proportion of ion components contained in the raw water varies depending on the country or region. However, in the same country or region, a temporal change of the proportion of the ion components in the raw water is small. Thus, a predetermined value corresponding to the country or region where water-softening device 1 is used is set in advance, and the electrical conductivity of the raw water is corrected by using the predetermined value. Accordingly, the electrical conductivity corresponding to the ions other than the hardness components can be acquired even in the electrical conductivity measurement, which is a method in which it is originally impossible to distinguish ion component species.

<Correction unit>

Correction unit 18 is connected to controller 20 to be described later, corrects the electrical conductivity of the soft water obtained by soft water detector 6 based on the electrical conductivity (first electrical conductivity) corresponding to the ions other than the hardness components in the raw water acquired by acquisition unit 17, and outputs the corrected electrical conductivity as second electrical conductivity.

Examples of the correction method include a method for subtracting a value of the first electrical conductivity from a value of the electrical conductivity of the soft water. When such correction is performed in this manner, examples of the ion components corresponding to the second electrical conductivity mainly include calcium ions and magnesium ions which are the hardness components, and chloride ions, nitrate ions, and sulfate ions which are counter ions of these cations, and monovalent cation components such as sodium ions and potassium ions are excluded. Thus, the second electrical conductivity is used. As a result, the hardness components in the soft water can be calculated in calculator 19 to be described later.

As described above, the reason for correcting the ion components corresponding to the second electrical conductivity not to include the monovalent cations will be described by taking sodium ions as an example. The reason for the correction is the magnitude of the influence of the sodium ions on the electrical conductivity. The soft water distributing through soft water detector 6 contains the sodium ions. This is because, when the raw water is softened by distributing weakly acidic cation exchange resin 9 in water-softening tank 4, the sodium ions and the calcium ions and magnesium ions as the hardness components are different in ease of ion exchange reaction with weakly acidic cation exchange resin 9. As compared with the calcium ions and magnesium ions which are divalent cations, the sodium ions which are the monovalent cations are less likely to cause the ion exchange reaction with weakly acidic cation exchange resin 9. Thus, in a case where the water containing these ions is distributed in weakly acidic cation exchange resin 9, the calcium ions and magnesium ions are preferentially ion-exchanged. In particular, in a case where city water used as domestic water is used as the raw water, when a general ion component proportion is considered, only in a case where the raw water is distributed through weakly acidic cation exchange resin 9 that is not used in the water-softening treatment (the terminals of the functional groups are all hydrogen ions), a part of the sodium ions is ion-exchanged. In many cases, the sodium ions are not ion-exchanged in weakly acidic cation exchange resin 9 in water-softening tank 4, and are taken out while being contained in the soft water.

Accordingly, in a case where the correction by correction unit 18 is not performed, hardness is calculated based on the electrical conductivity including the sodium ions. Thus, it is difficult to accurately calculate the hardness of the soft water. Thus, the correction by correction unit 18 is performed, and thus, the hardness of the soft water can be accurately calculated based on the second electrical conductivity, which is an electrical conductivity in which the influence of monovalent cations such as sodium ions is reduced.

<Calculator>

Calculator 19 is connected to controller 20 to be described later, corrects the second electrical conductivity output by correction unit 18, calculates the hardness components in the soft water, and outputs hardness component information. The hardness component information includes a hardness component concentration of neutralized soft water. Examples of the correction method include multiplication of the second electrical conductivity by a predetermined value. Here, the predetermined value is, for example, a proportionality constant between the second electrical conductivity and the hardness components in the soft water. In general, the electrical conductivity of the water is proportional to a concentration of the ion components in the water, and as the concentration of the ion components in the water increases, the electrical conductivity also increases. The proportionality constant of the ion concentration and the electrical conductivity varies depending on the ion species. The second electrical conductivity includes not only the electrical conductivity due to the hardness components but also the electrical conductivity due to the anions such as chloride ions, nitrate ions, and sulfate ions. The setting of the proportionality constant used as the predetermined value is adjusted in consideration of an anion composition corresponding to the country or region where water-softening device 1 is used in advance, and thus, the hardness component information in the soft water can be calculated more accurately.

Note that, in a case where the second electrical conductivity is less than or equal to 0, the hardness component concentration in the soft water is calculated as 0. In this case, the hardness of the soft water is determined to be 0. The case where the second electrical conductivity is less than or equal to 0 is a case where the electrical conductivity of the soft water is equivalent to the first electrical conductivity or a case where the electrical conductivity of the soft water is equal to or less than the first electrical conductivity. As a specific example of this case, there is a case where substantially the entire amount of hardness components in the raw water distributed through raw water detector 3 is adsorbed on weakly acidic cation exchange resin 9 and is not contained in the soft water distributing through soft water detector 6. Furthermore, there is a case where substantially the entire amount of hardness components in the raw water distributed through raw water detector 3 and a part of the ions other than the hardness components, such as sodium ions, are adsorbed on weakly acidic cation exchange resin 9 or the weakly basic anion exchange resin 10 and are not contained in the soft water distributing through the soft water detector.

<Controller>

Controller 20 controls the water-softening treatment for softening the raw water containing the hardness components. Furthermore, controller 20 controls the regeneration treatments of weakly acidic cation exchange resin 9 in water-softening tank 4 and weakly basic anion exchange resin 10 in neutralization tank 5. Moreover, controller 20 controls switching of the water-softening treatment, the regeneration treatment, and a wastewater treatment of water-softening device 1. At this time, controller 20 controls operations of electrodes 12, water pump 14, opening and closing valve 51 to opening and closing valve 55, opening and closing valve 61 to opening and closing valve 66, opening and closing valve 71, and opening and closing valve 72, performs switching of the water-softening treatment, the regeneration treatment, and the wastewater treatment, and executes each treatment.

Controller 20 is connected to acquisition unit 17, correction unit 18, calculator 19, and display 21, and controls input and output of the raw water electrical conductivity, the electrical conductivity of the soft water, the first electrical conductivity, the second electrical conductivity, and the hardness components in the soft water, respectively.

Note that, controller 20 includes a computer system including a processor and a memory. The computer system functions as a controller by the processor executing a program stored in the memory. The program to be executed by the processor is assumed here to be recorded in advance in the memory of the computer system, but may be provided in a manner being recorded in a non-transitory recording medium such as an optical disk or a memory card, or may be provided through a telecommunication line such as the Internet.

<Display>

Display 21 is connected to controller 20 in a wireless or wired manner, and displays information (hardness component information) on the hardness components in the soft water calculated by calculator 19. Display 21 may be a liquid crystal monitor installed in a housing of water-softening device 1, or may be a screen of a smartphone carried by a user of water-softening device 1. Here, examples of the information on the hardness components in the soft water displayed on display 21 include, for example, information in which the hardness of the soft water is represented as a numerical value, or information illustrating which level among original hardness levels belongs based on the numerical value of the hardness of the soft water. As a result, the user of water-softening device 1 can visually know the hardness of the soft water taken out from water-softening device 1.

<Flow path>

Next, circulation flow path 40 formed at the time of the regeneration treatment of water-softening device 1 will be described with reference to Fig. 2. Fig. 2 is a configuration diagram illustrating circulation flow path 40 of water-softening device 1.

As described above, as illustrated in Fig. 2, in water-softening device 1, electrolytic tank 11 and treatment tank 13 constituting regeneration device 8 are communicably connected by water flow path 50. Furthermore, in electrolytic tank 11 and treatment tank 13, first supply flow path 41, first collection flow path 45, second supply flow path 42, and second collection flow path 46 are connected to flow path 33, flow path 30, flow path 34, and flow path 31 from inlet port 2 to water intake port 7, respectively. Furthermore, flow path 31 and flow path 32 are bypass-connected by first bypass flow path 43. Furthermore, flow path 32 and flow path 33 are bypass-connected by second bypass flow path 44. Respective flow paths constitute circulation flow path 40 (first circulation flow path 40a and second circulation flow path 40b) to be described later.

First supply flow path 41 is a flow path for supplying the acidic electrolytic water from electrolytic tank 11 to second water-softening tank 4b. Opening and closing valve 63 is installed in first supply flow path 41. That is, water-softening device 1 includes first supply flow path 41 capable of drawing out the acidic electrolytic water from electrolytic tank 11 and capable of supplying the acidic electrolytic water to a downstream side of second water-softening tank 4b.

Furthermore, first bypass flow path 43 is a flow path for supplying the acidic electrolytic water from second water-softening tank 4b to first water-softening tank 4a. Opening and closing valve 65 is installed in first bypass flow path 43. That is, water-softening device 1 includes first bypass flow path 43 capable of supplying the acidic electrolytic water distributed through second water-softening tank 4b to a downstream side of first water-softening tank 4a. Note that, first bypass flow path 43 is provided, and thus, the regeneration treatment can progress without distributing the acidic electrolytic water in first neutralization tank 5a present between first water-softening tank 4a and second water-softening tank 4b.

First collection flow path 45 is a flow path for collecting the acidic electrolytic water containing the hardness components having passed through first water-softening tank 4a into treatment tank 13. Opening and closing valve 61 is installed in first collection flow path 45. That is, water-softening device 1 includes first collection flow path 45 that enables an upstream side of treatment tank 13 to be connected to an upstream side of first water-softening tank 4a.

Second supply flow path 42 is a flow path for supplying the alkaline electrolytic water from electrolytic tank 11 to second neutralization tank 5b. Opening and closing valve 64 is installed in second supply flow path 42. That is, water-softening device 1 includes second supply flow path 42 capable of drawing out the alkaline electrolytic water from electrolytic tank 11 and capable of supplying the alkaline electrolytic water to a downstream side of second neutralization tank 5b.

Furthermore, second bypass flow path 44 is a flow path for supplying the alkaline electrolytic water from second neutralization tank 5b to first neutralization tank 5a. Opening and closing valve 66 is installed in second bypass flow path 44. That is, water-softening device 1 includes second bypass flow path 44 capable of supplying the alkaline electrolytic water distributed through second neutralization tank 5b to a downstream side of first neutralization tank 5a.

Second collection flow path 46 is a flow path for collecting the alkaline electrolytic water having passed through first neutralization tank 5a into treatment tank 13. Opening and closing valve 62 is installed in second collection flow path 46. That is, water-softening device 1 includes second collection flow path 46 that enables an upstream side of treatment tank 13 to be connected to the upstream side of first neutralization tank 5a.

Circulation flow path 40 includes first circulation flow path 40a in which the water fed from treatment tank 13 by water pump 14 is distributed through second water-softening tank 4b and first water-softening tank 4a, and second circulation flow path 40b in which the water fed from treatment tank 13 by water pump 14 is distributed through second neutralization tank 5b and first neutralization tank 5a.

As illustrated in Fig. 2 (white arrows), first circulation flow path 40a is a flow path in which the water fed from treatment tank 13 by water pump 14 is distributed through electrolytic tank 11, second water-softening tank 4b, and first water-softening tank 4a, and is returned to and circulated through treatment tank 13. More specifically, first circulation flow path 40a is a flow path in which the water fed from treatment tank 13 by water pump 14 is distributed and circulated through water flow path 50, electrolytic tank 11, first supply flow path 41, opening and closing valve 63, second water-softening tank 4b, first bypass flow path 43, opening and closing valve 65, first water-softening tank 4a, first collection flow path 45, opening and closing valve 61, and treatment tank 13 in this order.

As illustrated in Fig. 2 (black arrows), second circulation flow path 40b is a flow path in which the water fed from treatment tank 13 by water pump 14 is distributed through electrolytic tank 11, second neutralization tank 5b, and first neutralization tank 5a, and is returned to and circulated through treatment tank 13. More specifically, second circulation flow path 40b is a flow path in which the water fed from treatment tank 13 by water pump 14 is distributed and circulated through water flow path 50, electrolytic tank 11, second supply flow path 42, opening and closing valve 64, second neutralization tank 5b, second bypass flow path 44, opening and closing valve 66, first neutralization tank 5a, second collection flow path 46, opening and closing valve 62, and treatment tank 13 in this order.

Here, a state of each flow path for circulating the water in circulation flow path 40 will be described.

In flow path 33, opening and closing valve 54 is installed on a downstream side of first supply flow path 41 and on an upstream side of second bypass flow path 44. First supply flow path 41 is brought into a state of being communicably connected to the downstream side of second water-softening tank 4b by closing opening and closing valve 54 and opening opening and closing valve 63. As a result, the acidic electrolytic water from electrolytic tank 11 can be supplied to second water-softening tank 4b.

In flow path 31, opening and closing valve 52 is installed on a downstream side of first bypass flow path 43 and on an upstream side of second collection flow path 46. Furthermore, in flow path 32, opening and closing valve 53 is installed on a downstream side of second bypass flow path 44 and on an upstream side of first bypass flow path 43. First bypass flow path 43 is brought into a state of being communicatively connected to an upstream side of second water-softening tank 4b and the downstream side of first water-softening tank 4a by closing opening and closing valve 52 and opening and closing valve 53 and opening opening and closing valve 65. As a result, the acidic electrolytic water distributed through second water-softening tank 4b can be supplied to first water-softening tank 4a.

Furthermore, in flow path 30, opening and closing valve 51 is installed on a downstream side of inlet port 2 and on an upstream side of first collection flow path 45. First collection flow path 45 is brought into a state of being communicatively connected to the upstream side of first water-softening tank 4a by closing opening and closing valve 51 and opening and closing valve 52 and opening opening and closing valve 61. As a result, water-softening device 1 can collect the water (acidic electrolytic water containing hardness components) distributed through first water-softening tank 4a and second water-softening tank 4b into treatment tank 13.

Furthermore, second collection flow path 46 is brought into a state of being communicatively connected to the upstream side of first neutralization tank 5a by closing opening and closing valve 52 and opening opening and closing valve 62. As a result, the water (alkaline electrolytic water containing the anions) distributed through first neutralization tank 5a and second neutralization tank 5b can be collected into treatment tank 13.

Furthermore, second bypass flow path 44 is brought into a state of being communicably connected to the downstream side of first neutralization tank 5a and an upstream side of second neutralization tank 5b by closing opening and closing valve 52, opening and closing valve 53, and opening and closing valve 54 and opening opening and closing valve 66. As a result, the alkaline electrolytic water distributed through second neutralization tank 5b can be supplied to first neutralization tank 5a.

Furthermore, second supply flow path 42 is brought into a state of being communicatively connected to the downstream side of second neutralization tank 5b by closing opening and closing valve 54 and opening and closing valve 55 and opening opening and closing valve 64. As a result, in water-softening device 1, the alkaline electrolytic water from the electrolytic tank 11 can be supplied to second neutralization tank 5b.

Furthermore, in water flow path 50, opening and closing valve 71 is installed on the downstream side (at a position between treatment tank 13 and water pump 14) of treatment tank 13. Water can be stored in treatment tank 13 by closing opening and closing valve 71. On the other hand, water can be supplied to water flow path 50 by opening opening and closing valve 71.

Furthermore, water can be supplied to circulation flow path 40 by closing opening and closing valve 51 and opening and closing valve 55. On the other hand, the supply of the water to circulation flow path 40 can be stopped by opening opening and closing valve 51 and opening and closing valve 55.

The above configuration is the configuration of water-softening device 1.

Next, water-softening device 1 during an operation will be described.

<Water-softening treatment, regeneration treatment, and wastewater treatment>

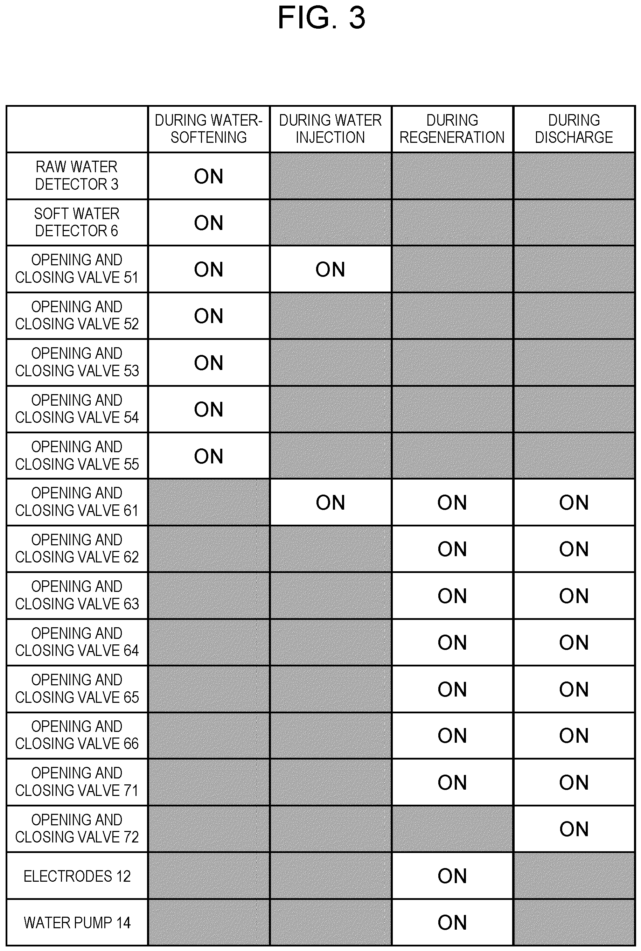

Next, the water-softening treatment, the regeneration treatment, and the wastewater treatment of water-softening device 1 starting from the regeneration treatment will be described with reference to Fig. 3. Fig. 3 is a diagram illustrating a state of water-softening device 1 during an operation.

In the water-softening treatment, the regeneration treatment, and the wastewater treatment, as illustrated in Fig. 3, controller 20 switches raw water detector 3, soft water detector 6, opening and closing valve 51 to opening and closing valve 55, opening and closing valve 61 to opening and closing valve 66, opening and closing valve 71, opening and closing valve 72, electrodes 12 of electrolytic tank 11, and water pump 14 to control these components to be brought into distribution states.

Here, "ON" in Fig. 3 indicates a state where raw water detector 3 and soft water detector 6 are energized, a state where the corresponding opening and closing valve is "open", a state where electrodes 12 are energized, and a state where water pump 14 is operating. Empty fields indicate a state where raw water detector 3 and soft water detector 6 are not energized, a state where the corresponding opening and closing valve is "closed", a state where electrodes 12 are not energized, and a state where water pump 14 is stopped.

<<Regeneration treatment>>

First, an operation of water-softening device 1 during the regeneration treatment by regeneration device 8 will be sequentially described with reference to fields of "DURING WATER INJECTION" and "DURING REGENERATION" in Fig. 3.

In water-softening device 1, in water-softening tank 4 filled with weakly acidic cation exchange resin 9, the cation exchange capacity decreases or disappears as the use is continued. That is, ion exchange cannot be performed after all the hydrogen ions, which are functional groups of the cation exchange resin, are exchanged for calcium ions or magnesium ions, which are hardness components. In such a state, the hardness components are contained in the treatment water. Thus, in water-softening device 1, it is necessary to perform the regeneration treatment of water-softening tank 4 and neutralization tank 5 by regeneration device 8.

Therefore, in water-softening device 1, controller 20 specifies a time zone in which the regeneration treatment can be performed once in a predetermined period (for example, 24 hours) and executes the regeneration treatment.

First, as illustrated in Fig. 3, during water injection, opening and closing valve 51 and opening and closing valve 61 are open. As a result, water-softening device 1 introduces the raw water into treatment tank 13 from inlet port 2 via first collection flow path 45 by a pressure of the city water. At this time, opening and closing valve 52 to opening and closing valve 55, opening and closing valve 62 to opening and closing valve 66, opening and closing valve 71, and opening and closing valve 72 are closed. A predetermined amount of water corresponding to the capacity of water-softening device 1 is stored in treatment tank 13, and thus, regeneration device 8 can secure the amount of water during the regeneration.

Subsequently, during regeneration, when opening and closing valve 51 to opening and closing valve 55, and opening and closing valve 72 are closed and opening and closing valve 61 to opening and closing valve 66 and opening and closing valve 71 are open, first circulation flow path 40a and second circulation flow path 40b are respectively formed as illustrated in Fig. 2.

When electrodes 12 of electrolytic tank 11 and water pump 14 are operated, the water stored in treatment tank 13 is circulated through each of first circulation flow path 40a and second circulation flow path 40b.

At this time, the acidic electrolytic water generated in electrolytic tank 11 is distributed through first supply flow path 41 and is fed into second water-softening tank 4b, and is circulated through second weakly acidic cation exchange resin 9b provided inside. The acidic electrolytic water distributed through second water-softening tank 4b is circulated through first bypass flow path 43, is fed into first water-softening tank 4a, and is circulated through first weakly acidic cation exchange resin 9a provided inside. That is, the acidic electrolytic water is passed to first weakly acidic cation exchange resin 9a and second weakly acidic cation exchange resin 9b, and thus, the cations (hardness components) adsorbed on first weakly acidic cation exchange resin 9a and second weakly acidic cation exchange resin 9b cause the ion exchange reaction with the hydrogen ions contained in the acidic electrolytic water. As a result, first weakly acidic cation exchange resin 9a and second weakly acidic cation exchange resin 9b are regenerated. Thereafter, the acidic electrolytic water distributed through first weakly acidic cation exchange resin 9a contains the cations and flows into first collection flow path 45. That is, the acidic electrolytic water containing the cations distributed through first weakly acidic cation exchange resin 9a and second weakly acidic cation exchange resin 9b is collected into treatment tank 13 via first bypass flow path 43 and first collection flow path 45.

As described above, first circulation flow path 40a causes the acidic electrolytic water to be distributed from the downstream side of second water-softening tank 4b positioned on a most downstream side from the inlet port of the raw water and having second weakly acidic cation exchange resin 9b having a small adsorption amount of hardness components, and to flow into the downstream side of first water-softening tank 4a positioned on the upstream side and having first weakly acidic cation exchange resin 9a to which more hardness components are adsorbed as compared with second weakly acidic cation exchange resin 9b. That is, first circulation flow path 40a distributes the acidic electrolytic water fed from electrolytic tank 11 through second water-softening tank 4b, feeds the acidic electrolytic water to first water-softening tank 4a by first bypass flow path 43, distributes the acidic electrolytic water in first water-softening tank 4a, collects the acidic electrolytic water into treatment tank 13, and then causes the acidic electrolytic water to flow to electrolytic tank 11. Furthermore, first circulation flow path 40a introduces the acidic electrolytic water fed from electrolytic tank 11 into first water-softening tank 4a and second water-softening tank 4b from the downstream sides of first water-softening tank 4a and second water-softening tank 4b, and causes the acidic electrolytic water to flow out of the upstream side where the adsorption amount of hardness components is larger than on the downstream side of each water-softening tank.

On the other hand, the alkaline electrolytic water generated in electrolytic tank 11 passes through second supply flow path 42, is fed into second neutralization tank 5b, and is distributed through second weakly basic anion exchange resin 10b provided inside. The alkaline electrolytic water distributed through second neutralization tank 5b is distributed through second bypass flow path 44, is fed into first neutralization tank 5a, and is distributed through first weakly basic anion exchange resin 10a provided inside. That is, the alkaline electrolytic water is passed to first weakly basic anion exchange resin 10a and second weakly basic anion exchange resin 10b, and thus, the anions adsorbed on first weakly basic anion exchange resin 10a and second weakly basic anion exchange resin 10b cause the ion exchange reaction with the hydroxide ions contained in the alkaline electrolytic water. As a result, first weakly basic anion exchange resin 10a and second weakly basic anion exchange resin 10b are regenerated. Thereafter, the alkaline electrolytic water distributed through second weakly basic anion exchange resin 10b contains the anions and flows into second collection flow path 46. That is, the alkaline electrolytic water containing the anions distributed through first weakly basic anion exchange resin 10a and second weakly basic anion exchange resin 10b is collected into treatment tank 13 via second bypass flow path 44 and second collection flow path 46.

In treatment tank 13, the acidic electrolytic water containing the cations collected from first water-softening tank 4a and second water-softening tank 4b and the alkaline electrolytic water containing the anions collected from first neutralization tank 5a and second neutralization tank 5b are mixed and neutralized.

At this time, the acidic electrolytic water containing the cations (hardness components) and the alkaline electrolytic water containing the anions are mixed, and thus, the hardness components react with the hydroxide ions contained in the alkaline electrolytic water. As a result, the precipitate is generated. For example, in a case where the hardness components in the acidic electrolytic water are calcium ions, calcium hydroxide is generated by the alkaline electrolytic water, or calcium carbonate is generated from bond between calcium ions and carbonate ions present in water.

Thereafter, when the treatment water treated in treatment tank 13 is distributed through filtration unit 15, the reaction product is removed from the treatment water, and the treatment water is passed to electrolytic tank 11 again via water flow path 50. The passed water is electrolyzed again in electrolytic tank 11. The electrolytic waters (acidic electrolytic water and alkaline electrolytic water) electrolyzed again in electrolytic tank 11 are used for regeneration of weakly acidic cation exchange resin 9 and regeneration of weakly basic anion exchange resin 10, respectively.

In water-softening device 1, operations of electrodes 12 and water pump 14 are stopped when the regeneration treatment is completed. Furthermore, the water-softening device proceeds to the wastewater treatment by opening opening and closing valve 72. Note that, the completion of the regeneration treatment may be set to a certain time from the start of the regeneration treatment (the start of the operation of electrodes 12).

<<Wastewater treatment>>

In water-softening device 1, when the regeneration treatment is completed, the water-softening device proceeds to the wastewater treatment. Here, the wastewater treatment is a treatment for discharging the acidic electrolytic water and the alkaline electrolytic water remaining in circulation flow path 40.

Next, an operation of water-softening device 1 during the wastewater treatment will be described with reference to a field of "DURING DISCHARGE" in Fig. 3.

As illustrated in Fig. 3, in water-softening device 1, in the wastewater treatment (during discharge), opening and closing valve 51 to opening and closing valve 55 are closed, and opening and closing valve 61 to opening and closing valve 66, opening and closing valve 71, and opening and closing valve 72 are open.

As a result, the acidic electrolytic water remaining in first circulation flow path 40a and the alkaline electrolytic water remaining in second circulation flow path 40b can flow into treatment tank 13.

Subsequently, when opening and closing valve 72 is open, the electrolytic water in treatment tank 13 can be discharged to the outside of the device by the action of air bleed valve 16.

The wastewater treatment is performed, and thus, it is possible to prevent the acidic electrolytic water and the alkaline electrolytic water remaining in circulation flow path 40 from mixing with the raw water flowing in from inlet port 2 and being discharged from water intake port 7 when the water-softening treatment is resumed.

In water-softening device 1, when the wastewater treatment is completed, the water-softening device proceeds to the water-softening treatment by closing opening and closing valve 61 to opening and closing valve 66, opening and closing valve 71, and opening and closing valve 72 and opening opening and closing valve 51 to opening and closing valve 55. Note that, the completion of the wastewater treatment may be set at the time when a certain time has elapsed from the start of the wastewater treatment.

<<Water-softening treatment>>

When the wastewater treatment is completed, water-softening device 1 proceeds to the water-softening treatment.

Next, an operation of water-softening device 1 during water-softening treatment will be described with reference to a field of "DURING WATER-SOFTENING" in Fig. 3.

In water-softening device 1, as illustrated in Fig. 3, in the water-softening treatment (during water-softening), opening and closing valve 55 provided in water intake port 7 is made open in a state where opening and closing valve 51 to opening and closing valve 54 are open. As a result, city water (raw water containing hardness components) is distributed through water-softening tank 4 and neutralization tank 5 from the outside. Thus, water-softening device 1 can take out softened water (neutral soft water) from water intake port 7. At this time, all of opening and closing valve 61 to opening and closing valve 66, opening and closing valve 71, and opening and closing valve 72 are in a closed state. Furthermore, the operations of electrodes 12 of electrolytic tank 11 and water pump 14 are also stopped.

Specifically, as illustrated in Fig. 1, in the water-softening treatment, the raw water to be supplied is supplied from inlet port 2 to first water-softening tank 4a through flow path 30. The raw water supplied to first water-softening tank 4a is distributed through first weakly acidic cation exchange resin 9a provided in first water-softening tank 4a. At this time, cations, which are hardness components in the raw water are adsorbed by the action of first weakly acidic cation exchange resin 9a, and hydrogen ions are released (ion exchange is performed). Cations are removed from the raw water, and thus, the raw water is softened. However, since the water softened by first weakly acidic cation exchange resin 9a contains a large amount of hydrogen ions exchanged for the hardness components and flowed out, the soft water is acidic water having a low pH. Since water-softening is less likely to progress in a state where the pH is lowered, the water distributed through first water-softening tank 4a is passed to first neutralization tank 5a to perform neutralization.

The softened water is further distributed through flow path 31 and flows into first neutralization tank 5a. In first neutralization tank 5a, the hydrogen ions contained in the softened water are adsorbed by the action of first weakly basic anion exchange resin 10a. That is, since the hydrogen ions are removed from the water softened by first water-softening tank 4a, the lowered pH is increased and neutralized. Thus, as compared with a case where the water softened in first water-softening tank 4a is directly softened in second water-softening tank 4b, the water-softening treatment in second water-softening tank 4b easily progresses. The water neutralized by first neutralization tank 5a is further distributed through flow path 32 and flows into second water-softening tank 4b.

On the other hand, in second water-softening tank 4b, the neutralized neutral water is passed from flow path 32, and passes through second weakly acidic cation exchange resin 9b filled inside. As a result, in second water-softening tank 4b, cations, which are hardness components are adsorbed and hydrogen ions are released by the action of second weakly acidic cation exchange resin 9b. That is, in second water-softening tank 4b, the hardness components that could not be removed in first water-softening tank 4a are exchanged with hydrogen ions of second weakly acidic cation exchange resin 9b. And the water-softening is performed. However, since the water softened with second weakly acidic cation exchange resin 9b contains hydrogen ions exchanged for the hardness components and flowed out, the soft water becomes acidic water. The soft water containing the hydrogen ions is distributed through flow path 33 and flows into second neutralization tank 5b. In second neutralization tank 5b, the hydrogen ions contained in the inflowed soft water are adsorbed by the action of second weakly basic anion exchange resin 10b. That is, since the hydrogen ions are removed from the soft water, the lowered pH increases, and the soft water becomes softened neutral water that can be used as domestic water. In other words, in second neutralization tank 5b, the acidic water flowing out of second water-softening tank 4b and containing the hydrogen ions released from the second weakly acidic cation exchange resin 9b is neutralized. The neutralized soft water can be distributed through flow path 34, and can be taken out from water intake port 7.

Water-softening device 1 executes the regeneration treatment in a case where a time zone specified by controller 20 is reached or in a case where the water-softening treatment exceeds a certain time.

«Calculation of hardness of soft water»

In water-softening device 1, raw water detector 3 detects the electrical conductivity of the raw water distributing through flow path 30. Furthermore, soft water detector 6 detects the electrical conductivity of the soft water distributing through flow path 34. Furthermore, acquisition unit 17 performs constant correction (multiplication of the electrical conductivity of the raw water by a predetermined value or the like) on the electrical conductivity of the raw water output from raw water detector 3, acquires the electrical conductivity (first electrical conductivity) corresponding to the ions other than the hardness components in the raw water, and outputs the first electrical conductivity. The electrical conductivity of the soft water is corrected (the value of the first electrical conductivity is subtracted from the value of the electrical conductivity of the soft water) in correction unit 18 by using the output first electrical conductivity, and is output as the second electrical conductivity. Calculator 19 calculates the hardness of the soft water (for example, multiplies the second electrical conductivity by a predetermined value) by using the output second electrical conductivity, and outputs the hardness of the soft water as a numerical value.

As described above, in water-softening device 1, the water-softening treatment, the regeneration treatment, and the wastewater treatment are repeatedly executed.

From above, in accordance with water-softening device 1 according to the first exemplary embodiment, the following effects can be obtained.

(1) Water-softening device 1 includes water-softening tank 4, neutralization tank 5, raw water detector 3, soft water detector 6, acquisition unit 17, correction unit 18, calculator 19, and display 21. Water-softening tank 4 softens the raw water containing the hardness components with weakly acidic cation exchange resin 9 to generate the acidic soft water. Neutralization tank 5 neutralizes a pH of the soft water having passed through water-softening tank 4 with weakly basic anion exchange resin 10 to generate the neutralized soft water. Raw water detector 3 detects the electrical conductivity of the raw water. Soft water detector 6 detects the electrical conductivity of the soft water having passed through water-softening tank 4 and neutralization tank 5. Acquisition unit 17 acquires the electrical conductivity (first electrical conductivity) corresponding to the ions other than the hardness components in the raw water. Correction unit 18 corrects the electrical conductivity obtained by soft water detector 6 based on the electrical conductivity corresponding to the ions other than the hardness components in the raw water acquired by acquisition unit 17, and outputs the second electrical conductivity. Calculator 19 calculates the hardness of the soft water based on the second electrical conductivity output by correction unit 18. Display 21 gives a notification about the hardness of the soft water calculated by calculator 19. Water-softening device 1 is configured such that the raw water is distributed through raw water detector 3, water-softening tank 4, neutralization tank 5, and soft water detector 6 in this order. In accordance with such a configuration, the electrical conductivity of the raw water is acquired by raw water detector 3, and constant correction (multiplication by a predetermined value or the like) is performed on the electrical conductivity of the raw water by acquisition unit 17. As a result, the electrical conductivity (first electrical conductivity) corresponding to the ion components other than the hardness components can be acquired, the electrical conductivity (second electrical conductivity) obtained by correcting the electrical conductivity of the soft water detected by soft water detector 6 can be acquired based on the electrical conductivity corresponding to the ion components other than the hardness components by correction unit 18, and the hardness components in the soft water can be calculated from the second electrical conductivity in calculator 19. Accordingly, even in a case where hard water in which the hardness components and other ion components are mixed is distributed, it is possible to calculate the hardness components in the soft water from the electrical conductivity of the electrical conductivities of the hard water and the soft water obtained by distributing the hard water. Furthermore, display 21 is provided, and thus, the information on the hardness components in the soft water output from calculator 19 is displayed on display 21. The user of water-softening device 1 can visually know he hardness of the soft water taken out from water-softening device 1.

(2) Water-softening device 1 includes water-softening tank 4 and neutralization tank 5. Water-softening tank 4 softens the raw water containing the hardness components with weakly acidic cation exchange resin 9. Neutralization tank 5 neutralizes the pH of the soft water having passed through water-softening tank 4 with weakly basic anion exchange resin 10. Furthermore, water-softening tank 4 includes first water-softening tank 4a and second water-softening tank 4b. Neutralization tank 5 includes first neutralization tank 5a and second neutralization tank 5b. Water-softening device 1 is configured such that the raw water is distributed through first water-softening tank 4a, first neutralization tank 5a, second water-softening tank 4b, and second neutralization tank 5b in this order.

In accordance with such a configuration, the raw water containing the hardness components flows out of first water-softening tank 4a before the pH of the raw water is lowered by the water-softening treatment in first water-softening tank 4a, is neutralized in first neutralization tank 5a, and is softened in second water-softening tank 4b. Thus, since it is possible to suppress a decrease in pH and acidification of the water distributing in water-softening tank 4, exchange between the hardness components and the hydrogen ions retained in second weakly acidic cation exchange resin 9b of second water-softening tank 4b easily occurs. Accordingly, water-softening device 1 can improve the water-softening performance as compared with a case where each of water-softening tank 4 and neutralization tank 5 is not divided.

(3) Water-softening device 1 further includes electrolytic tank 11 for generating the acidic electrolytic water for regenerating weakly acidic cation exchange resin 9 in water-softening tank 4 and the alkaline electrolytic water for regenerating weakly basic anion exchange resin 10 in neutralization tank 5, and treatment tank 13 for mixing the acidic electrolytic water distributed through water-softening tank 4 and the alkaline electrolytic water distributed through neutralization tank 5 and supplying the mixture to electrolytic tank 11. In accordance with such a configuration, weakly acidic cation exchange resin 9 can be regenerated by the acidic electrolytic water generated in electrolytic tank 11, and weakly basic anion exchange resin 10 can be regenerated by the alkaline electrolytic water. Thus, the maintenance frequency of water-softening device 1 can be reduced, and water-softening device 1 that can be used for a long period of time can be obtained.

(Second exemplary embodiment)

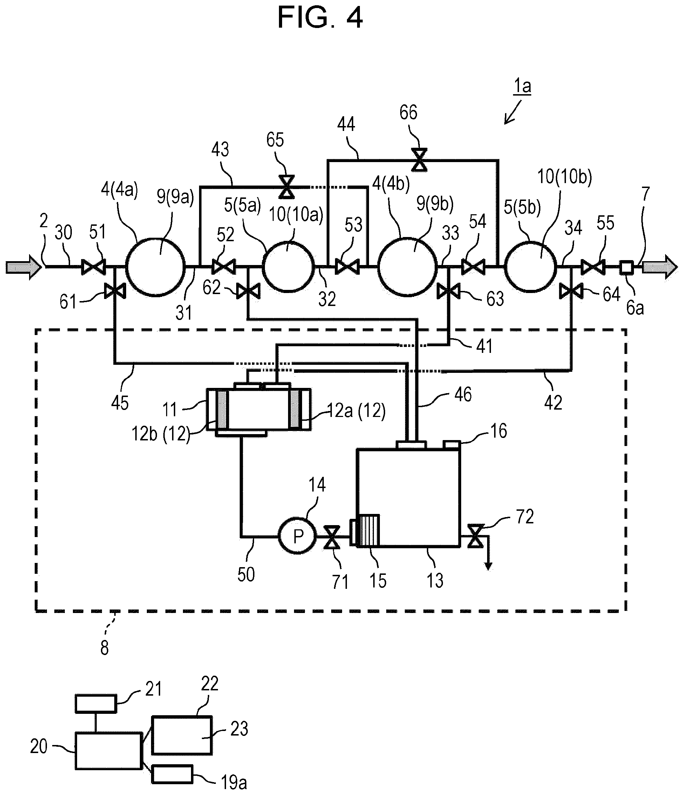

Water-softening device 1a according to a second exemplary embodiment of the present disclosure will be described with reference to Fig. 4. Fig. 4 is a conceptual diagram illustrating water-softening device 1a according to the second exemplary embodiment of the present disclosure. Note that, Fig. 4 conceptually illustrates each element of water-softening device 1a.

Water-softening device 1a according to the second exemplary embodiment of the present disclosure is different from the first exemplary embodiment in that water-softening device 1a does not include raw water detector 3, water-softening device 1a includes determination unit 22 that determines a first period until the electrical conductivity of the neutralized soft water reaches a first predetermined value and a second period after the electrical conductivity of the neutralized soft water reaches the first predetermined value, water-softening device 1a includes storage 23 that stores, as a reference electrical conductivity, the electrical conductivity of the soft water at an initial period of the second period, and calculator 19a calculates hardness component information based on the reference electrical conductivity and the electrical conductivity of the soft water. Other configurations of water-softening device 1a are the same as water-softening device 1 according to the first exemplary embodiment. Hereinafter, descriptions of the matters having been already described in the first exemplary embodiment will be omitted as appropriate, and differences from the first exemplary embodiment will be mainly described.

<Overall configuration>

Water-softening device 1a is a device that generates neutral soft water from raw water containing hardness components supplied from an outside.

Specifically, as illustrated in Fig. 4, water-softening device 1a includes water-softening tank 4 (first water-softening tank 4a and second water-softening tank 4b), neutralization tank 5 (first neutralization tank 5a and second neutralization tank 5b), soft water detector 6a that detects the electrical conductivity of the soft water after treatment, water intake port 7 for soft water after treatment, and regeneration device 8. Furthermore, regeneration device 8 includes electrolytic tank 11, treatment tank 13, and water pump 14. Furthermore, water-softening device 1a includes a plurality of opening and closing valves (opening and closing valve 51 to opening and closing valve 55, opening and closing valve 61 to opening and closing valve 66, opening and closing valve 71, and opening and closing valve 72), calculator 19a, controller 20, display 21, determination unit 22, and storage 23.

<Soft water detector>

Soft water detector 6a is provided in flow path 34, and detects the electrical conductivity (electrical conductivity of soft water) of the neutral soft water flowing out of second neutralization tank 5b. Soft water detector 6a is connected to be able to communicate with controller 20, determination unit 22, and storage 23 to be described later, in a wireless or wired manner. Information on the detected electrical conductivity of the soft water is used as input signals of controller 20, determination unit 22, and storage 23. As soft water detector 6a, a general-purpose detector can be used as long as the detector measures the electrical conductivity of the liquid.

<Determination unit>

Determination unit 22 is connected to controller 20 to be described later, and includes storage 23, to be described later, provided inside. Determination unit 22 compares the electrical conductivity of the soft water detected by soft water detector 6 with the reference electrical conductivity to be described later, and determines that a period until the electrical conductivity of the soft water reaches the reference electrical conductivity is a first period and a period after the electrical conductivity of the soft water reaches the reference electrical conductivity is a second period. The determination result is used when the hardness components in the soft water are calculated by calculator 19a.

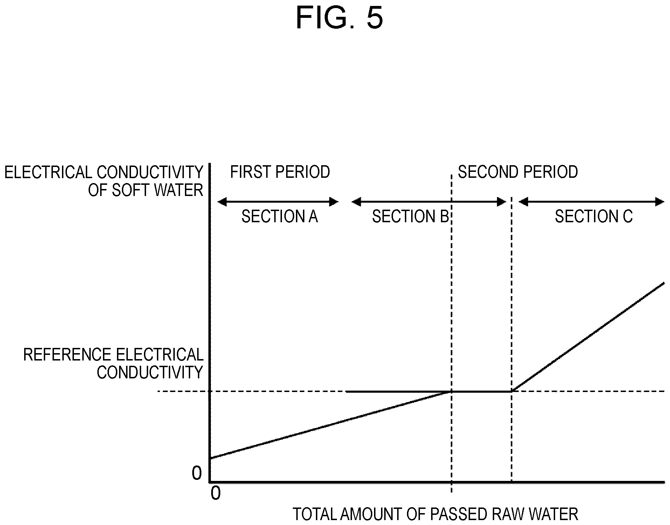

A specific determination method of the first period and the second period will be described with reference to Fig. 5. Fig. 5 is a diagram illustrating a change in electrical conductivity during water-softening by the water-softening device according to the second exemplary embodiment of the present disclosure.

Specifically, when water-softening device 1a after the regeneration treatment during the water-softening treatment is taken as an example, as illustrated in Fig. 5, the water-softening treatment is divided into three sections, that is, section A, section B, and section C based on a behavior of the electrical conductivity of the soft water. Section A is a section in which the electrical conductivity of the soft water is less than the reference electrical conductivity. Section B is a section in which the electrical conductivity of the soft water is about the same as the reference electrical conductivity (for example, about ±5% from the reference electrical conductivity). Section C is a section in which the electrical conductivity of the soft water exceeds the reference electrical conductivity. Determination unit 22 determines that a portion corresponding to section A is a first period, and portions corresponding to section B and section C are second periods. Note that, the reason why the electrical conductivity of the soft water behaves as illustrated in Fig. 5 is that, when the raw water is softened by being distributed through weakly acidic cation exchange resin 9 in water-softening tank 4 as described in the first exemplary embodiment, the behavior is influenced by a difference in ease of ion exchange reaction with weakly acidic cation exchange resin 9 between calcium ions and magnesium ions which are hardness components and monovalent cations such as sodium ions. Specifically, the calcium ions and the magnesium ions, which are the hardness components, are more likely to cause the ion exchange reaction with weakly acidic cation exchange resin 9 than the monovalent cations. Hereinafter, the monovalent cations will be described with the sodium ions as an example. In section A, almost all of the hardness components are ion-exchanged, and some of the sodium ions are ion-exchanged. However, the sodium ions are less likely to be ion-exchanged as a total amount of passed raw water increases. Accordingly, in section A, there is an increase in electrical conductivity of the soft water derived from the electrical conductivity of the sodium ions. In section B, substantially the entire amount of hardness components is ion-exchanged, while substantially the entire amount of sodium ions is not ion-exchanged and contained in water. In section B, since there are no significant changes in the amount of ion components and an ion component composition in the soft water, the electrical conductivity of the soft water continues to be maintained at a similar value. In section C, as a result of the progress of the ion exchange between the hydrogen ions of the functional group at the terminal of weakly acidic cation exchange resin 9 and the hardness components, the ion exchange reaction itself gradually becomes less likely to occur, and the electrical conductivity of the soft water increases due to an increase in concentration of the hardness components in the water.

That is, section A is a section in which the electrical conductivity of the soft water increases by ions other than the hardness components such as sodium ions. Section C is a section in which the electrical conductivity of the soft water increases by the ions of the hardness components. Note that, due to the difference in ease of the ion exchange reaction, basically, an increase in concentration of the hardness components does not occur before the sodium ions are not ion-exchanged. Thus, in section A and section B, the hardness component concentration in the soft water can be regarded as 0.

<<Storage>>

Storage 23 stores, as the reference electrical conductivity, a value of the electrical conductivity of the soft water corresponding to section B in Fig. 5. The stored reference electrical conductivity is output to determination unit 22 and is used to determine section A, section B, section C, the first period, and the second period. Note that, the total amount of passed raw water and the amount of change (inclination of a graph) in electrical conductivity of the soft water with respect to the total amount of passed raw water are considered regarding a timing at which the electrical conductivity is set as the reference electrical conductivity. The electrical conductivity of the soft water when the amount of change in electrical conductivity of the soft water with respect to the total amount of passed raw water is less than or equal to a certain value (for example, less than or equal to $0.1 \mu S/cm \cdot L$), or when the amount of change in electrical conductivity is the smallest among the entire amounts of change in electrical conductivity is preferably taken as the reference electrical conductivity. Furthermore, by updating and storing the reference electrical conductivity at a constant interval (for example, one month), even in a case where a change occurs in the ion component composition of the raw water, the reference electrical conductivity can be set to a reference electrical conductivity corresponding to the change.

Storage 23 may be provided inside or outside determination unit 22 as long as the storage can be connected to determination unit 22.

<Calculator>

Calculator 19a is connected to controller 20 to be described later, and calculates and outputs the hardness components in the soft water based on the electrical conductivity of the soft water detected by soft water detector 6a and the reference electrical conductivity output from determination unit 22 and storage 23. The calculation method differs depending on whether or not the determination by determination unit 22 is the first period or the second period. In the case of the first period, the hardness components in the soft water are calculated as 0 regardless of the electrical conductivity of the soft water. In the case of the second period, for example, there is a method for subtracting the reference electrical conductivity from the electrical conductivity of soft water and multiplying the value calculated by the subtraction by a predetermined value. The predetermined value here is a proportionality constant between a "difference between the electrical conductivity of the soft water and the reference electrical conductivity" and the "hardness components in the soft water". In general, the electrical conductivity of the water is proportional to a concentration of the ion components in the water, and as the concentration of the ion components in the water increases, the electrical conductivity also increases. The proportionality constant of the ion concentration and the electrical conductivity varies depending on the ion species. The "difference between the electrical conductivity of the soft water and the reference electrical conductivity" includes not only the electrical conductivity due to the hardness components but also the electrical conductivity due to the anions such as chloride ions, nitrate ions, and sulfate ions. However, the setting of the predetermined value is adjusted in consideration of the anion composition corresponding to the country or region where water-softening device 1a is used in advance, and thus, the hardness components in the soft water can be calculated more accurately.

<Controller>

Controller 20 controls the water-softening treatment for softening the raw water containing the hardness components. Furthermore, controller 20 controls the regeneration treatment of weakly acidic cation exchange resin 9 in water-softening tank 4 and weakly basic anion exchange resin 10 in neutralization tank 5. Moreover, controller 20 controls the switching of the water-softening treatment, the regeneration treatment, and the wastewater treatment of water-softening device 1a. At this time, controller 20 controls operations of electrodes 12, water pump 14, opening and closing valve 51 to opening and closing valve 55, opening and closing valve 61 to opening and closing valve 66, opening and closing valve 71, and opening and closing valve 72, performs switching of the water-softening treatment, the regeneration treatment, and the wastewater treatment, and executes each treatment.

Furthermore, controller 20 is connected to each of determination unit 22, storage 23, calculator 19a, and display 21, and controls each of the electrical conductivity of the soft water, the reference electrical conductivity, and the input and output of the hardness components in the soft water.

<Calculation of hardness of soft water>

In water-softening device 1a, determination unit 22 compares the electrical conductivity of the soft water output from soft water detector 6a with the reference electrical conductivity, and determines that the period until the electrical conductivity of the soft water reaches the reference electrical conductivity is the first period and the period after the electrical conductivity reaches the reference electrical conductivity is the second period. As the reference electrical conductivity, a value of the electrical conductivity of the soft water corresponding to section B in Fig. 5 is used in storage 23. Calculator 19a calculates and outputs the hardness components in the soft water based on the electrical conductivity of the soft water detected by soft water detector 6a and the reference electrical conductivity output from determination unit 22 and storage 23. The calculation differs depending on whether or not the determination by determination unit 22 is the first period or the second period. In the case of the first period, the hardness components in the soft water are calculated as 0 regardless of the electrical conductivity of the soft water, and in the case of the second period, the reference electrical conductivity is subtracted from the electrical conductivity of the soft water, and the value calculated by the subtraction is multiplied by a predetermined value.

From above, in accordance with water-softening device 1a according to the second exemplary embodiment, the following effects can be obtained.

Water-softening device 1a includes water-softening tank 4, neutralization tank 5, soft water detector 6a, determination unit 22, storage 23, calculator 19a, and display 21. Water-softening tank 4 softens the raw water containing the hardness components with weakly acidic cation exchange resin 9 to generate the acidic soft water. Neutralization tank 5 neutralizes a pH of the soft water having passed through water-softening tank 4 with weakly basic anion exchange resin 10 to generate the neutralized soft water. Soft water detector 6a detects the electrical conductivity of the soft water having passed through water-softening tank 4 and neutralization tank 5. Determination unit 22 compares the electrical conductivity of the soft water detected by soft water detector 6a with the reference electrical conductivity, and determines that the period until the electrical conductivity of the soft water reaches the reference electrical conductivity is the first period and the period after the electrical conductivity of the soft water reaches the reference electrical conductivity is the second period. Storage 23 stores, as the reference electrical conductivity, the electrical conductivity of the soft water when the amount of change in electrical conductivity of the soft water with respect to the amount of passed raw water is small.

Calculator 19a calculates and outputs the hardness components in the soft water based on the electrical conductivity of the soft water output from soft water detector 6a and the reference electrical conductivity output from determination unit 22 and storage 23. Display 21 gives a notification about the hardness of the soft water calculated by calculator 19a. Water-softening device 1a is configured such that the raw water is distributed through water-softening tank 4, neutralization tank 5, and soft water detector 6a in this order.

In accordance with such a configuration, unlike the first exemplary embodiment, even though the raw water detector and the acquisition unit are not provided, the first electrical conductivity in the first exemplary embodiment can be predicted from a change behavior of the electrical conductivity of the soft water and can be set as the reference electrical conductivity. Furthermore, as in the first exemplary embodiment, also in a case where hard water in which hardness components and other ion components are mixed is distributed, the hardness components in the soft water can be calculated from the electrical conductivities of the hard water and the soft water obtained by distributing the hard water.

(Third exemplary embodiment)

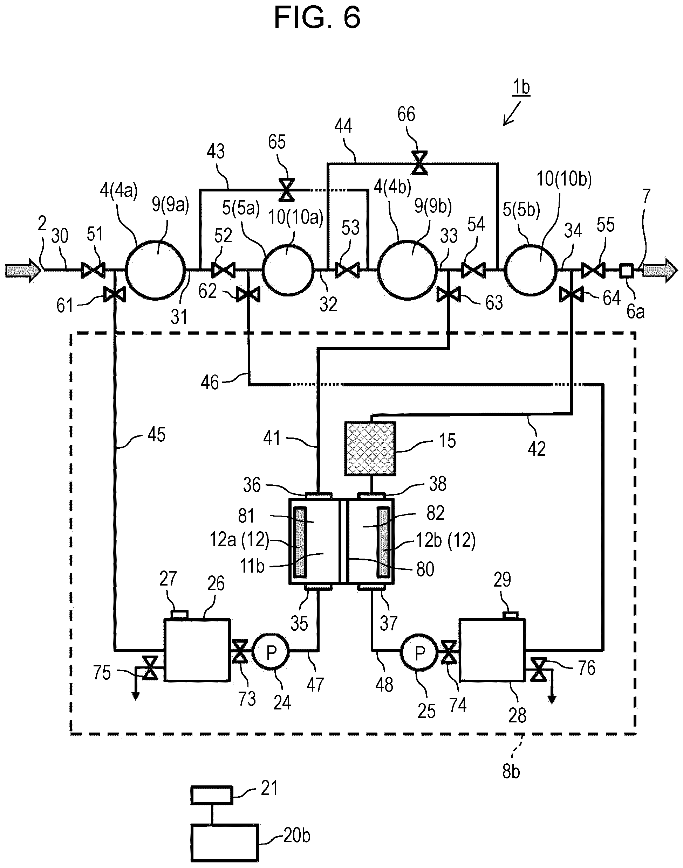

Next, water-softening device 1b according to a third exemplary embodiment of the present disclosure will be described with reference to Fig. 6. Fig. 6 is a conceptual diagram illustrating water-softening device 1b according to the third exemplary embodiment of the present disclosure. Note that, Fig. 6 conceptually illustrates each element of water-softening device 1b.

Water-softening device 1b according to the third exemplary embodiment of the present disclosure is different from the first exemplary embodiment and the second exemplary embodiment in that the hardness components are calculated based on a difference between the electrical conductivity of the soft water and a third electrical conductivity in the first period until the electrical conductivity of the soft water reaches the reference electrical conductivity and regeneration device 8b for distributing regeneration waters on an acid side and an alkali side not to be mixed by dividing the water intake port after electrolytic tank 11b into two places on the acid side and then alkali side. Other configurations of water-softening device 1b are the same as water-softening device 1a according to the second exemplary embodiment. Hereinafter, description of the matters having been already described in the second exemplary embodiment will be omitted as appropriate, and differences from the second exemplary embodiment will be mainly described.

<Overall configuration>

Water-softening device 1b is a device that generates neutral soft water from raw water containing hardness components supplied from an outside.

Specifically, as illustrated in Fig. 6, water-softening device 1b includes water-softening tank 4 (first water-softening tank 4a and second water-softening tank 4b), neutralization tank 5 (first neutralization tank 5a and second neutralization tank 5b),soft water detector 6a that detects electrical conductivity of soft water after treatment, water intake port 7 for soft water after treatment, and regeneration device 8b. Furthermore, water-softening device 1b includes a plurality of opening and closing valves (opening and closing valve 51 to opening and closing valve 55, opening and closing valve 61 to opening and closing valve 66, and opening and closing valve 73 to opening and closing valve 76), controller 20b, and display 21.

<Regeneration device>

Regeneration device 8b is a device that regenerates weakly acidic cation exchange resin 9 in water-softening tank 4 and regenerates weakly basic anion exchange resin 10 in neutralization tank 5. Specifically, regeneration device 8b includes electrolytic tank 11b, acidic electrolytic water storage tank 26, alkaline electrolytic water storage tank 28, acidic electrolytic water circulation pump 24, alkaline electrolytic water circulation pump 25, and filtration unit 15. In regeneration device 8b, first supply flow path 41, first collection flow path 45, second supply flow path 42, and second collection flow path 46 are connected to flow path 33, flow path 30, flow path 34, and flow path 31 from inlet port 2 to water intake port 7, respectively. Furthermore, flow path 31 and flow path 32 are connected by first bypass flow path 43. Furthermore, flow path 32 and flow path 33 are connected by second bypass flow path 44. Furthermore, first supply flow path 41 and first collection flow path 45 are connected by first water flow path 47. Furthermore, second supply flow path 42 and second collection flow path 46 are connected by second water flow path 48. Each flow path constitutes circulation flow path 40 (first circulation flow path 40c and second circulation flow path 40d) to be described later.

Here, first supply flow path 41 is a flow path for supplying the acidic electrolytic water from first ejection port 36 of electrolytic tank 11b to be described later to second water-softening tank 4b.

First bypass flow path 43 is a flow path for supplying the acidic electrolytic water distributed through second water-softening tank 4b to first water-softening tank 4a while bypassing first neutralization tank 5a.

That is, first collection flow path 45 is a flow path for collecting the acidic electrolytic water containing the hardness components having passed through first water-softening tank 4a into acidic electrolytic water storage tank 26.

First water flow path 47 is a flow path for supplying the acidic electrolytic water collected by acidic electrolytic water storage tank 26 to first water intake port 35 of electrolytic tank 11b to be described later by acidic electrolytic water circulation pump 24.

Second supply flow path 42 is a flow path for supplying the alkaline electrolytic water from second ejection port 38 of electrolytic tank 11b to be described later to second neutralization tank 5b.

Second bypass flow path 44 is a flow path for supplying the alkaline electrolytic water distributed through second neutralization tank 5b to first neutralization tank 5a while bypassing second water-softening tank 4b.

Second collection flow path 46 is a flow path for collecting the alkaline electrolytic water having passed through first neutralization tank 5a into alkaline electrolytic water storage tank 28.

Second water flow path 48 is a flow path for supplying the alkaline electrolytic water collected by alkaline electrolytic water storage tank 28 to second water intake port 37 of electrolytic tank 1 1b to be described later by alkaline electrolytic water circulation pump 25.

«Electrolytic tank»

Electrolytic tank 11b generates the acidic electrolytic water for regenerating weakly acidic cation exchange resin 9 and the alkaline electrolytic water for regenerating weakly basic anion exchange resin 10 by electrolysis of water. Electrolytic tank 11b includes electrode 12a, electrode 12b, diaphragm 80, anode chamber 81, and cathode chamber 82.

Here, a case where electrode 12a is energized to have a higher potential than electrode 12b will be described with reference to Fig. 6. Electrolytic tank 11b is separated into anode chamber 81 and cathode chamber 82 by diaphragm 80 provided inside.

Diaphragm 80 suppresses the mixing of the acidic electrolytic water generated in anode chamber 81 and the alkaline electrolytic water generated in cathode chamber 82 during the regeneration treatment. As a result, it is possible to suppress consumption of the hydrogen ions in the acidic electrolytic water and the hydroxide ions in the alkaline electrolytic water by neutralization reaction. Accordingly, diaphragm 80 can suppress a decrease in regeneration efficiencies of weakly acidic cation exchange resin 9 and weakly basic anion exchange resin 10. For example, a fluorine-based porous membrane can be used as diaphragm 80. Note that, in addition to the fluorine-based porous membrane, a generally used porous membrane such as a hydrocarbon-based porous membrane may be used as the porous membrane used for diaphragm 80. However, since the fluorine-based porous membrane is excellent in durability, the fluorine-based porous membrane is used in water-softening device 1b.

Anode chamber 81 is a part where the acidic electrolytic water is generated during electrolysis of water. Anode chamber 81 includes electrode 12a, first water intake port 35, and first ejection port 36.

Electrode 12a generates, as an anode, hydrogen ions by electrolyzing water. Accordingly, in anode chamber 81 including electrode 12a, a hydrogen ion concentration of water increases and the acidic electrolytic water is obtained. For example, a platinum electrode can be used as electrode 12a.

First water intake port 35 is an opening through which the acidic electrolytic water stored in acidic electrolytic water storage tank 26 is introduced into anode chamber 81 through first water flow path 47. First water intake port 35 is connected to first water flow path 47.

First ejection port 36 is an opening through the acidic electrolytic water containing the hydrogen ions generated by electrode 12a is supplied to water-softening tank 4 through first supply flow path 41. First ejection port 36 is connected to first supply flow path 41.

Cathode chamber 82 is a part where the alkaline electrolytic water is generated during electrolysis of water. Cathode chamber 82 includes electrode 12b, second water intake port 37, and second ejection port 38.

Electrode 12b generates, as a cathode, hydroxide ions by electrolyzing water. Accordingly, in cathode chamber 82 including electrode 12b, the hydroxide ion concentration of the water increases, and the alkaline electrolytic water is obtained. For example, a platinum electrode can be used as electrode 12b.

Second water intake port 37 is an opening through which the alkaline electrolytic water stored in alkaline electrolytic water storage tank 28 is introduced into cathode chamber 82 through second water flow path 48. Second water intake port 37 is connected to second water flow path 48.

Second ejection port 38 is an opening through which the alkaline electrolytic water containing the hydroxide ions generated by electrode 12b is supplied to neutralization tank 5 through second supply flow path 42. Second ejection port 38 is connected to second supply flow path 42.

That is, electrolytic tank 1 1b generates the acidic electrolytic water in anode chamber 81 by electrolyzing the water (water supplied from acidic electrolytic water storage tank 26) flowing in from first water intake port 35 by using electrode 12a, and discharges the acidic electrolytic water from first ejection port 36. Furthermore, electrolytic tank 11b generates the alkaline electrolytic water in cathode chamber 82 by electrolyzing the water (water supplied from alkaline electrolytic water storage tank 28) flowing in from second water intake port 37 by using electrode 12b, and discharges the alkaline electrolytic water from second ejection port 38.

<<Acidic electrolytic water storage tank and alkaline electrolytic water storage tank>>

Acidic electrolytic water storage tank 26 is a tank or container including air bleed valve 27. Acidic electrolytic water storage tank 26 secures and stores water to be distributed through first circulation flow path 40c when weakly acidic cation exchange resin 9 is regenerated. Furthermore, acidic electrolytic water storage tank 26 supplies the acidic electrolytic water containing the hardness components distributed through water-softening tank 4 to electrolytic tank 11b.

The acidic electrolytic water distributed through water-softening tank 4 is passed to electrolytic tank 11b and is electrolyzed in electrolytic tank 11b. The hydrogen ion concentration of the acidic electrolytic water is increased by the hydrogen ions generated by electrolysis, and the acidic electrolytic water is distributed through water-softening tank 4 and is then passed to acidic electrolytic water storage tank 26 again. Accordingly, the acidic electrolytic water used for the regeneration of weakly acidic cation exchange resin 9 can be reused. Further, since the acidic electrolytic water is circulated without being discharged, the regeneration can be performed in a state where the hydrogen ion concentration is increased, and the regeneration efficiency of weakly acidic cation exchange resin 9 can be improved.

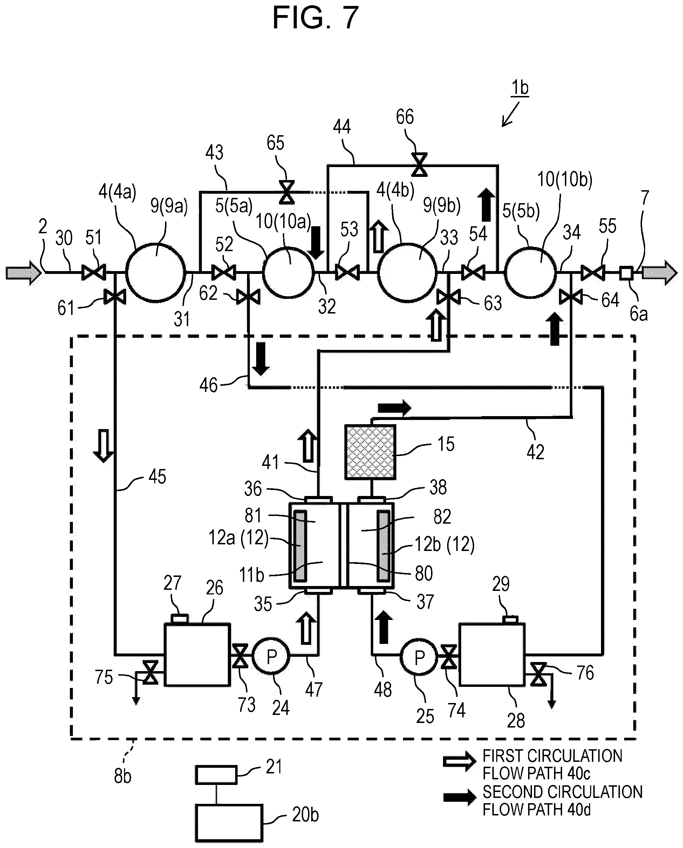

Alkaline electrolytic water storage tank 28 is a tank or a container including air bleed valve 29. Alkaline electrolytic water storage tank 28 secures and stores water to be distributed in second circulation flow path 40d (see Fig. 7) when weakly basic anion exchange resin 10 is regenerated. Furthermore, alkaline electrolytic water storage tank 28 supplies the alkaline electrolytic water containing the anions distributed through neutralization tank 5 to electrolytic tank 11b.

The alkaline electrolytic water distributed through neutralization tank 5 is passed to electrolytic tank 11b, and is electrolyzed in electrolytic tank 11b. The hydroxide ion concentration of the alkaline electrolytic water is increased by the hydroxide ions generated by electrolysis, and the alkaline electrolytic water is distributed through neutralization tank 5, and is then passed to alkaline electrolytic water storage tank 28 again. Accordingly, the alkaline electrolytic water used for the regeneration of weakly basic anion exchange resin 10 can be reused. Furthermore, since the alkaline electrolytic water is circulated without being discharged, the regeneration can be performed in a state where the hydroxide ion concentration is increased, and the regeneration efficiency of weakly basic anion exchange resin 10 can be improved.

<Acidic electrolytic water circulation pump and alkaline electrolytic water circulation pump>

Acidic electrolytic water circulation pump 24 is a device that distributes acidic electrolytic water in first circulation flow path 40c during the regeneration treatment by regeneration device 8b. Acidic electrolytic water circulation pump 24 is provided in first water flow path 47 that communicatively connects between acidic electrolytic water storage tank 26 and first water intake port 35 of electrolytic tank 11b.

Alkaline electrolytic water circulation pump 25 is a device that distributes water in second circulation flow path 40d during the regeneration treatment by regeneration device 8b. Alkaline electrolytic water circulation pump 25 is provided in second water flow path 48 that communicatively connects between alkaline electrolytic water storage tank 28 and second water intake port 37 of electrolytic tank 11b.

Acidic electrolytic water circulation pump 24 and alkaline electrolytic water circulation pump 25 are provided independently of each other without forming one pump, and thus, it is possible to pass the acidic electrolytic water and the alkaline electrolytic water to first circulation flow path 40c and second circulation flow path 40d, respectively, without mixing the acidic electrolytic water and the alkaline electrolytic water. That is, it is possible to suppress consumption of the hydrogen ions in the acidic electrolytic water and the hydroxide ions in the alkaline electrolytic water each other by reaction. Thus, as compared with a case where the acidic electrolytic water and the alkaline electrolytic water are mixed and fed, acidic electrolytic water having a higher hydrogen ion concentration can be fed to water-softening tank 4, and alkaline electrolytic water having a higher hydroxide ion concentration can be fed to neutralization tank 5. Accordingly, the regeneration efficiencies of water-softening tank 4 and neutralization tank 5 are improved. Furthermore, acidic electrolytic water circulation pump 24 and alkaline electrolytic water circulation pump 25 are connected to be able to communicate with controller 20b to be described later in a wireless or wired manner. Examples of acidic electrolytic water circulation pump 24 and alkaline electrolytic water circulation pump 25 include centrifugal pumps capable of supplying respective required flow rates to first circulation flow path 40c and second circulation flow path 40d to be described later during the regeneration treatment.

<<Filtration unit>>

Filtration unit 15 is provided in second supply flow path 42 at a rear stage of electrolytic tank 11b and at a front stage of second neutralization tank 5b in second circulation flow path 40d.

Filtration unit 15 separates a solid contained in the alkaline electrolytic water supplied from second ejection port 38 of electrolytic tank 11b. The solid is a reaction product precipitated due to the involvement of the hardness components in the alkaline electrolytic water distributing through electrolytic tank 11b and the hydroxide ions generated by electrode 12b. For example, in a case where the hardness components contained in the alkaline electrolytic water are magnesium ions, magnesium hydroxide is generated as the solid. The solid precipitated during the regeneration treatment remains in neutralization tank 5 when the solid is not removed, and the hardness components are eluted from the solid. As a result, the soft water hardness during the water-softening treatment is increased, that is, the water-softening performance is decreased. Thus, the precipitate is separated by filtration unit 15, and thus, inflow and deposition of the precipitate into second neutralization tank 5b can be suppressed. As a result, the decrease in water-softening performance during the water-softening treatment can be suppressed.

The form of filtration unit 15 is not limited as long as the reaction product with the hardness components contained in the alkaline electrolytic water supplied from electrolytic tank 11b can be separated. For example, a form using a cartridge type filter, a filtration layer using a granular filter material, a cyclone type solid-liquid separator, a hollow fiber membrane, or the like can be mentioned.

<Flow path>

Next, first circulation flow path 40c and second circulation flow path 40d formed during the regeneration treatment of water-softening device 1b will be described with reference to Fig. 7. Fig. 7 is a diagram illustrating a state of each component during a resin regeneration treatment of water-softening device 1b.

As illustrated in Fig. 7 (white arrows), first circulation flow path 40c is a flow path in which the water fed from acidic electrolytic water storage tank 26 by acidic electrolytic water circulation pump 24 is distributed through first water intake port 35 and first ejection port 36 of electrolytic tank 11b, second water-softening tank 4b, and first water-softening tank 4a and is returned to and circulated through acidic electrolytic water storage tank 26. More specifically, first circulation flow path 40c is a flow path in which the water fed from acidic electrolytic water storage tank 26 by acidic electrolytic water circulation pump 24 is distributed and circulated through first water flow path 47, first water intake port 35, first ejection port 36, first supply flow path 41, opening and closing valve 63, second water-softening tank 4b, first bypass flow path 43, opening and closing valve 65, first water-softening tank 4a, first collection flow path 45, opening and closing valve 61, and acidic electrolytic water storage tank 26 in this order.

As illustrated in Fig. 7 (black arrows), second circulation flow path 40d is a flow path in which the water fed from alkaline electrolytic water storage tank 28 by alkaline electrolytic water circulation pump 25 is distributed through second water intake port 37 and second ejection port 38 of electrolytic tank 11b, second neutralization tank 5b, and first neutralization tank 5a, and is returned to and circulated through alkaline electrolytic water storage tank 28. More specifically, second circulation flow path 40d is a flow path in which the water fed from alkaline electrolytic water storage tank 28 by alkaline electrolytic water circulation pump 25 is distributed and circulated through second water flow path 48, second water intake port 37, second ejection port 38, filtration unit 15, second supply flow path 42, opening and closing valve 64, second neutralization tank 5b, second bypass flow path 44, opening and closing valve 66, first neutralization tank 5a, second collection flow path 46, opening and closing valve 62, and alkaline electrolytic water storage tank 28 in this order.

<Controller>

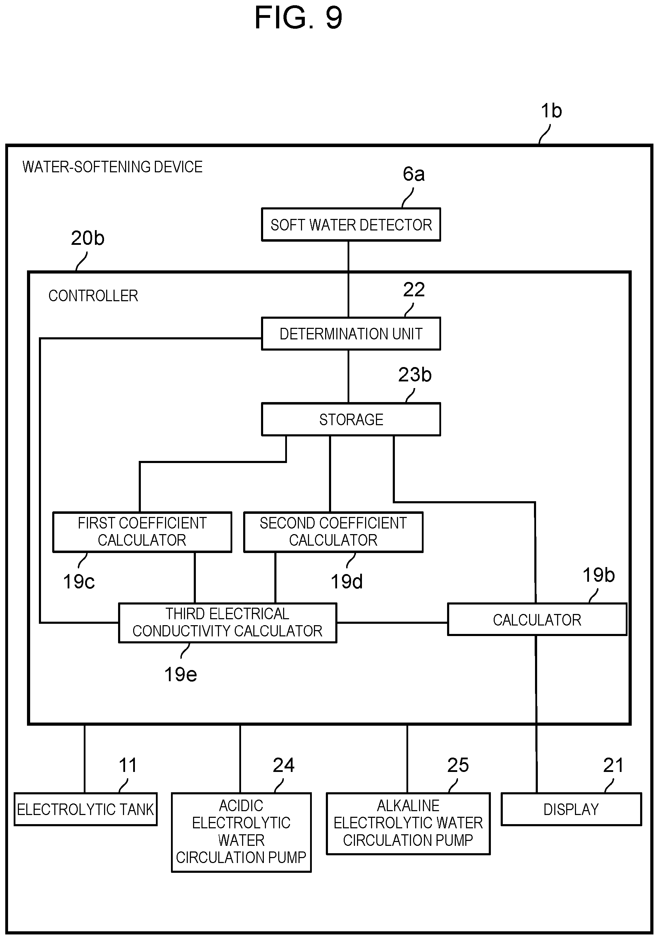

Next, an example of a configuration of controller 20b will be described with reference to Fig. 9. Fig. 9 is a functional block diagram illustrating each configuration of controller 20b of water-softening device 1b. Controller 20b includes determination unit 22, storage 23b, first coefficient calculator 19c, second coefficient calculator 19d, third electrical conductivity calculator 19e, and calculator 19b.

Controller 20b controls the water-softening treatment for softening the raw water containing the hardness components. Furthermore, controller 20b controls the regeneration treatments of weakly acidic cation exchange resin 9 in water-softening tank 4 and weakly basic anion exchange resin 10 in neutralization tank 5. Moreover, controller 20b controls switching of the water-softening treatment, the regeneration treatment, and the wastewater treatment of water-softening device 1. At this time, controller 20b controls operations of electrolytic tank 11b, acidic electrolytic water circulation pump 24, alkaline electrolytic water circulation pump 25, opening and closing valve 51 to opening and closing valve 55, opening and closing valve 61 to opening and closing valve 66, and opening and closing valve 73 to opening and closing valve 76, performs switching of the water-softening treatment, the regeneration treatment, and the wastewater treatment, and executes each treatment.

Furthermore, controller 20b is connected to determination unit 22, storage 23b, first coefficient calculator 19c, second coefficient calculator 19d, third electrical conductivity calculator 19e, calculator 19b, and display 21, and controls input and output of the electrical conductivity of the soft water, the reference electrical conductivity, a first coefficient, a second coefficient, the third electrical conductivity, the calculated hardness in the soft water, and the like.

Note that, controller 20b includes a computer system including a processor and a memory. The computer system functions as a controller by the processor executing a program stored in the memory. The program to be executed by the processor is assumed here to be recorded in advance in the memory of the computer system, but may be provided in a manner being recorded in a non-transitory recording medium such as an optical disk or a memory card, or may be provided through a telecommunication line such as the Internet.

<<Determination unit>>

Determination unit 22 is connected to soft water detector 6a, storage 23b to be described later, and calculator 19b. Determination unit 22 receives the electrical conductivity of the soft water detected by soft water detector 6a and the reference electrical conductivity stored in storage 23b. Determination unit 22 compares the input electrical conductivity of the soft water with the reference electrical conductivity, determines that the period until the electrical conductivity of the soft water reaches the reference electrical conductivity is the first period, and determines that the period after the electrical conductivity of the soft water reaches the reference electrical conductivity is the second period. The method for calculating the hardness components in the soft water in calculator 19b is changed according to the determination result.

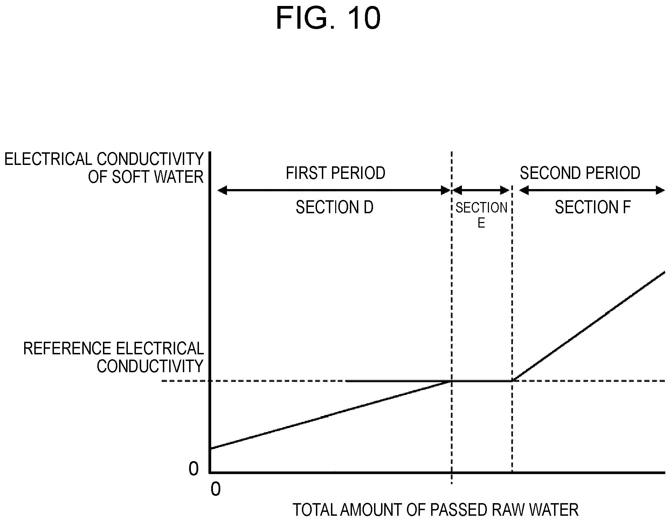

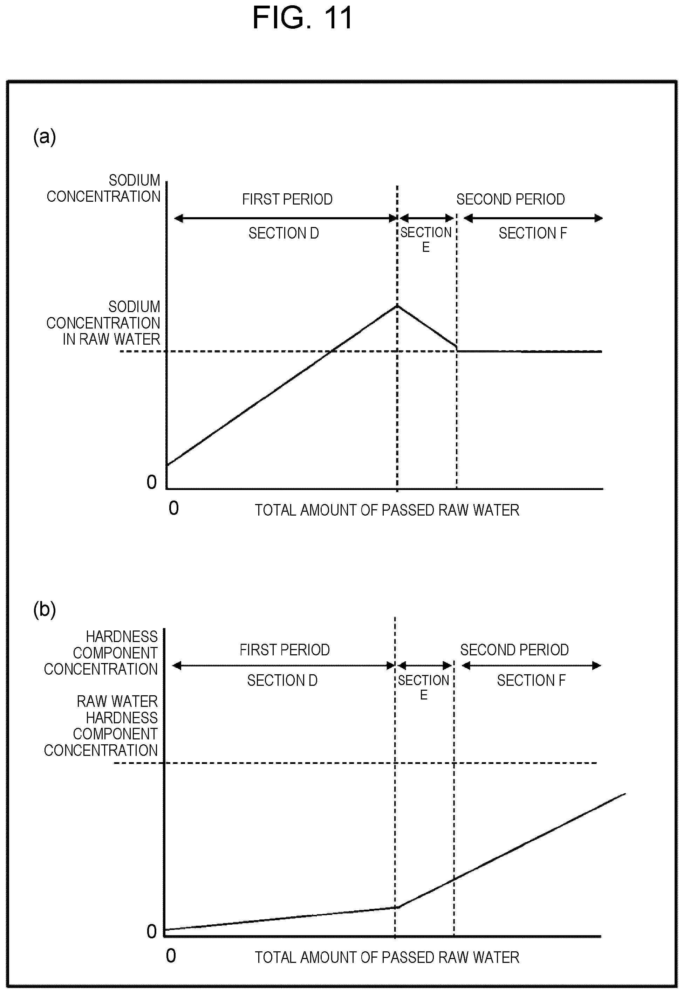

A specific determination method of the first period and the second period will be described with reference to Figs. 10 and 11. Fig. 10 is a diagram illustrating a change in electrical conductivity of the soft water by the water-softening device according to the third exemplary embodiment of the present disclosure. Fig. 11 is a diagram illustrating a change in ion concentration of the soft water by the water-softening device according to the third exemplary embodiment of the present disclosure. Part (a) of Fig. 11 is a diagram illustrating a change in concentration of ions other than the hardness components, for example, sodium ions, and part (b) of Fig. 11 is a diagram illustrating a change in concentration of the hardness components. Note that, the "TOTAL AMOUNT OF PASSED RAW WATER" illustrated in Figs. 10 and 11 is a cumulative amount of passed raw water since the completion of the regeneration treatment.

Specifically, when water-softening device 1b during the water-softening treatment is taken as an example, as illustrated in Fig. 10, the water-softening treatment is divided into three sections D, E, and F from a behavior of the electrical conductivity of the soft water. Section D is a section in which the electrical conductivity of the soft water is less than the reference electrical conductivity. Section E is a section in which the electrical conductivity of the soft water is about the same as the reference electrical conductivity (for example, about ±5% from the reference electrical conductivity). Section F is a section in which the electrical conductivity of the soft water exceeds the reference electrical conductivity. Determination unit 22 determines that a portion corresponding to section D is a first period and portions corresponding to section E and section F are second period.

The reason why determination unit 22 determines the first period and the second period in this manner will be described.

When the raw water is softened by distributing weakly acidic cation exchange resin 9 in water-softening tank 4, adsorption abilities of calcium ions and magnesium ions, which are hardness components in the raw water, and monovalent cations such as sodium ions other than the hardness components to weakly acidic cation exchange resin 9 are different depending on the strength of selectivity of weakly acidic cation exchange resin 9. That is, the ease of removal from the raw water is different. Specifically, the hardness components are more likely to cause the ion exchange reaction with weakly acidic cation exchange resin 9 than cations other than the hardness components, and are more likely to be removed from the raw water.

Thus, as illustrated in part (b) of Fig. 11, in section D which is the first period, even though most of the hardness components in the raw water is removed from the raw water and the total amount of passed raw water increases, the hardness component concentration gradually increases without significantly increasing. On the other hand, in section D which is the first period, as illustrated in part (a) of Fig. 11, monovalent cations such as sodium in the soft water are hardly removed from the raw water, and the concentration of monovalent cations increases to the same level as the sodium concentration in the raw water. This is because, the monovalent cations are less likely to be adsorbed on weakly acidic cation exchange resin 9 as compared to the hardness components, and ion adsorption performance of weakly acidic cation exchange resin 9 is decreased due to an increase in total amount of passed raw water. Thereafter, a concentration of monovalent cations such as sodium in the soft water temporarily exceeds a concentration of monovalent cations in the raw water. This is because, since the hardness components have a higher adsorption ability to weakly acidic cation exchange resin 9 than the monovalent cations, an exchange reaction occurs between the monovalent cations once adsorbed on weakly acidic cation exchange resin 9 and the hardness components in the raw water.

Accordingly, in section D, the increase in electrical conductivity of the soft water is mainly derived from the electrical conductivity of the monovalent cations such as sodium ions other than the hardness components.

Furthermore, in section E, the adsorption of the cations to weakly acidic cation exchange resin 9 gradually decreases the performance of weakly acidic cation exchange resin 9, and substantially the entire amount of hardness components is ion-exchanged. On the other hand, substantially the entire amount of sodium ions and the like remains in the raw water without being ion-exchanged. Specifically, as illustrated in part (a) of Fig. 11, the sodium concentration in the soft water approaches the sodium concentration in the raw water from a value exceeds the sodium concentration in the raw water. That is, it becomes a state that the monovalent cations such as sodium in the raw water are not adsorbed on weakly acidic cation exchange resin 9. On the other hand, as illustrated in part (b) of Fig. 11, in section E, the hardness components in the raw water are hardly adsorbed on weakly acidic cation exchange resin 9 due to the decrease in performance of weakly acidic cation exchange resin 9. Thus, a rate of increase in hardness component concentration in the soft water increases more than in the case of section D. Accordingly, as illustrated in Fig. 10, in section E, since the increase in concentration of the hardness component ions in the soft water and a decrease in concentration of the ions other than the hardness components occur at the same time, the electrical conductivity of the soft water continues to be maintained at a similar value.

Furthermore, in section F, most of the hydrogen ions of the functional group at the terminal of weakly acidic cation exchange resin 9 are exchanged with the cations in the raw water. Thus, the ion exchange reaction with the monovalent cations and the hardness components in the raw water hardly occurs. Accordingly, the hardness component concentration in the soft water continues to increase at a speed equivalent to section E. Accordingly, in section F, most of the increase in electrical conductivity of the soft water is caused by the increase in concentration of the hardness components.

That is, section D, which is the first period, is a section in which the hardness component concentration in the soft water gradually increases. Section E and Section F, which are the second periods, are sections in which the hardness component concentration in the soft water increases relatively quickly. In the first period, third electrical conductivity calculator 19e to be described later calculates a third electrical conductivity to be described later based on the first coefficient and the second coefficient to be described later, and inputs the third electrical conductivity to calculator 19b. In the second period, storage 23b to be described later inputs the stored reference conductivity to calculator 19b. The third electrical conductivity is a value indicating an electrical conductivity corresponding to ions other than the hardness components in the first period, and the reference electrical conductivity is a value indicating an electrical conductivity corresponding to ions other than the hardness components in the second period. That is, depending on the determination result of determination unit 22, calculator 19b uses any one of the third electrical conductivity and the reference electrical conductivity for the calculation of the hardness components.

<<Storage>>

Storage 23b stores, as the reference electrical conductivity, a value of the electrical conductivity of the soft water corresponding to section E in Fig. 10. The stored reference electrical conductivity is output to determination unit 22 and is used to determine section D, section E, section F, the first period, and the second period.

Storage 23b stores the electrical conductivity corresponding to the hardness components in the soft water, the ion concentration other than the hardness components, and the electrical conductivity of the soft water.

Storage 23b is connected to first coefficient calculator 19c, and transmits the electrical conductivity corresponding to the hardness components in the soft water, the ion concentration other than the hardness components, and the electrical conductivity of the soft water stored in storage 23b to first coefficient calculator 19c.

Furthermore, storage 23b is connected to second coefficient calculator 19d, and transmits the ion concentration other than the hardness components stored in storage 23b to second coefficient calculator 19d.

Note that, regarding the electrical conductivity corresponding to the hardness components in the soft water, the ion concentration other than the hardness components, and the electrical conductivity of the soft water, data of a trial run when water-softening device 1b is installed may be used as fixed values, or values according to water quality of each region may be estimated and set in advance. Furthermore, the total amount of passed raw water and the amount of change (inclination of a graph) in electrical conductivity of the soft water with respect to the total amount of passed raw water are considered regarding a timing at which the electrical conductivity is set as the reference electrical conductivity. The electrical conductivity of the soft water when the amount of change in electrical conductivity of the soft water with respect to the total amount of passed raw water is less than or equal to a certain value (for example, less than or equal to $0.1\ \mu S/cm \cdot L$), or when the amount of change in electrical conductivity is the smallest among the entire amounts of change in electrical conductivity is preferably taken as the reference electrical conductivity. Furthermore, by updating and storing the reference electrical conductivity at a constant interval (for example, one month), even in a case where a change occurs in the ion component composition of the raw water, the reference electrical conductivity can be set to a reference electrical conductivity corresponding to the change.

<<First coefficient calculator and second coefficient calculator>>

In a case where the determination result of determination unit 22 is the first period, first coefficient calculator 19c calculates the first coefficient to be used as input data of calculator 19b when the third electrical conductivity is calculated.

First coefficient calculator 19c calculates first coefficient $k_1$ by using electrical conductivity $C_H$ corresponding to the hardness components in the soft water, ion concentration $[E]$ other than the hardness components, and electrical conductivity $C_{(H+E)}$ of the soft water stored in storage 23b. The first coefficient is a value corresponding to a ratio between the ion concentration other than the hardness components in the soft water and the electrical conductivity.

Specifically, the electrical conductivity of the soft water is represented by the sum of the electrical conductivity corresponding to the hardness components in the soft water and the electrical conductivity corresponding to the ions other than the hardness components in the soft water. Furthermore, the electrical conductivity corresponding to the ions other than the hardness components can be expressed by a product of the ion concentration other than the hardness components in the soft water and the first coefficient. That is, when the electrical conductivity corresponding to the hardness components in the soft water is $C_H$, the ion concentration other than the hardness components is $[E]$, and the electrical conductivity of the soft water is $C_{(H+E)}$, first coefficient $k_1$ is expressed by the following equation.

[Math. 1]

$$C_{(H+E)} - C_H = k_1 \times [E]$$

In a case where the determination result of determination unit 22 is the first period, second coefficient calculator 19d calculates second coefficient $k_2$ used as input data of calculator 19b when the third electrical conductivity is calculated.

Second coefficient calculator 19d calculates the second coefficient by using ion concentration $[E]$ other than the hardness components stored in storage 23b. The second coefficient is a value corresponding to a change rate of the ion concentration other than the hardness components in the soft water corresponding to the passed amount of raw water.

Specifically, the ion concentration other than the hardness components in the soft water is calculated by the sum of the ion concentration other than the hardness components in the soft water at the start of softening and the product of the passed amount of raw water and the second coefficient. The ion concentration other than the hardness components in the soft water after the start of softening can be calculated by adding an increase amount of the ion concentration other than the hardness components in the soft water corresponding to the passed amount of raw water to the ion concentration other than the hardness components in the soft water at the start of softening. That is, when the amount of passed water from the start of softening to a current point in time is Q and the ion concentration other than the hardness components in the soft water when the amount of passed water is 0 L is $[E]\ (Q = 0)$, second coefficient $k_2$ is expressed by the following equation.

[Math. 2]

$$[E] = k_2 \times Q + [E]\ (Q = 0)$$

First coefficient $k_1$ and second coefficient $k_2$ can be calculated by the following equations.

[Math. 3]

$$k_1 = (C_{(H+E)} - C_H)/[E]$$

[Math. 4]

$$k_2 = [E] - [E]/Q \; (Q = 0)$$

<<Third electrical conductivity calculator>>

Third electrical conductivity calculator 19e is connected to first coefficient calculator 19c and second coefficient calculator 19d, and calculates the third electrical conductivity based on the first coefficient, the second coefficient, and the amount of passed water at the current point in time. The third electrical conductivity is an electrical conductivity corresponding to the ions other than the hardness components. The calculated third electrical conductivity is transmitted to calculator 19b. Furthermore, third electrical conductivity $C_E$ can be expressed by the following equation from the above equation.

[Math. 5]

$$C_E = k_1 \times (k_1 \times Q + [E] \; (Q = 0))$$

«Calculator»

Calculator 19b calculates and outputs the hardness components in the soft water based on the electrical conductivity of the soft water detected by soft water detector 6a. The calculation method differs depending on whether or not the determination by determination unit 22 is the first period or the second period.
In the case of the first period, for example, the third electrical conductivity corresponding to the ions other than the hardness of the neutralized soft water is calculated by using the first coefficient and the second coefficient input from storage 23b, and a value calculated by subtracting the third electrical conductivity from the electrical conductivity of the soft water is multiplied by a predetermined value.
In the case of the second period, for example, the reference electrical conductivity is subtracted from the electrical conductivity of the soft water, and the value calculated by the subtraction is multiplied by a predetermined value.
Note that, as the predetermined value, a proportionality constant between the "difference between the electrical conductivity of the soft water and the third electrical conductivity" and the "hardness components in the soft water" is used in the first period. Furthermore, in the second period, the proportionality constant between the "difference between the electrical conductivity of the soft water and the reference electrical conductivity" and the "hardness components in the soft water" is used as the predetermined value. In general, the electrical conductivity of the water is proportional to a concentration of the ion components in the water, and as the concentration of the ion components in the water increases, the electrical conductivity also increases. The proportionality constant of the ion concentration and the electrical conductivity varies depending on the ion species. The "difference between the electrical conductivity of the soft water and the third electrical conductivity" in the first period or the "difference between the electrical conductivity of the soft water and the reference electrical conductivity" in the second period mainly includes the electrical conductivity due to the hardness components. Thus, the setting of the predetermined value is adjusted according to the concentration of the cations corresponding to the country or region where water-softening device 1b is used, and thus, the hardness components in the soft water can be calculated more accurately.
The above configuration is the configuration of water-softening device 1b.
Next, an operation of water-softening device 1b will be described.

<Water-softening treatment, regeneration treatment, and wastewater treatment>

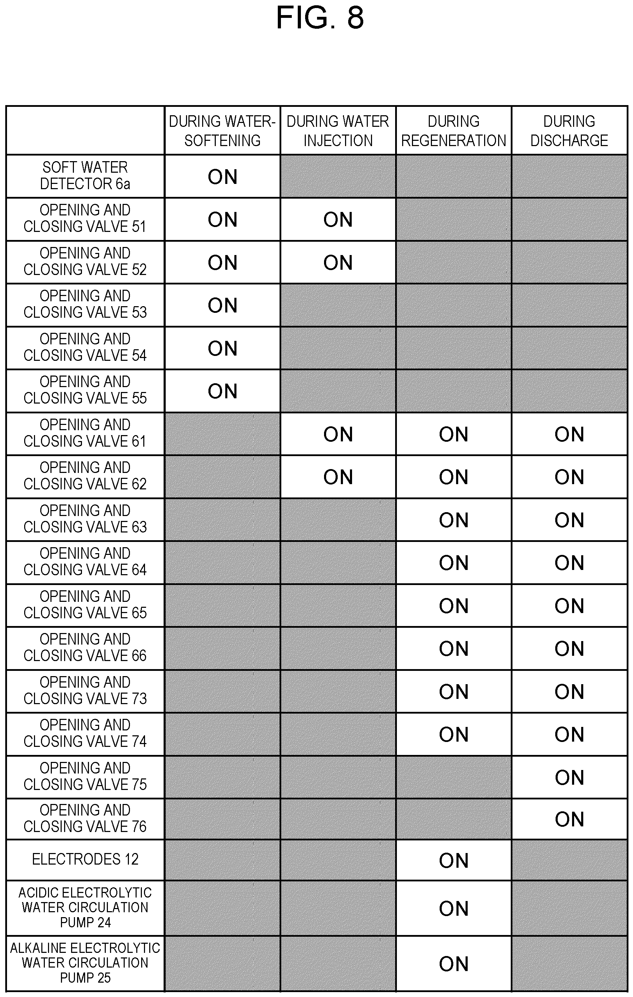

Next, the water-softening treatment, the regeneration treatment, and the wastewater treatment of water-softening device 1b will be described with reference to Fig. 8. Fig. 8 is a diagram illustrating a state of water-softening device 1b during an operation. In the water-softening treatment, the regeneration treatment, and the wastewater treatment, as illustrated in Fig. 8, controller 20b switches soft water detector 6a, opening and closing valve 51 to opening and closing valve 55, opening and closing valve 61 to opening and closing valve 66, opening and closing valve 73 to opening and closing valve 76, electrodes 12 of electrolytic tank 11b, acidic electrolytic water circulation pump 24, and alkaline electrolytic water circulation pump 25 to control these components to be brought into distribution states.

Here, "ON" in Fig. 8 indicates a state where soft water detector 6a is energized, a state where the opening and closing valve is "open", a state where electrodes 12 are energized, and a state where acidic electrolytic water circulation pump 24 and alkaline electrolytic water circulation pump 25 are operating. Empty fields indicate a state where soft water detector 6a is not energized, a state where the opening and closing valve is "closed", a state where electrodes 12 are not energized, and a state where acidic electrolytic water circulation pump 24 and alkaline electrolytic water circulation pump 25 are stopped.

<<Water-softening treatment>>

First, an operation of water-softening device 1b during water-softening treatment will be described with reference to a field "DURING WATER-SOFTENING" in Fig. 8.

In water-softening device 1b, as illustrated in Fig. 8, in the water-softening treatment (during water-softening), opening and closing valve 55 provided in water intake port 7 is open in a state where opening and closing valve 51 to opening and closing valve 54 are open. As a result, since the raw water containing the hardness components is distributed through water-softening tank 4 and neutralization tank 5 from the outside, water-softening device 1b can take out softened water (neutral soft water) from water intake port 7. At this time, all of opening and closing valve 61 to opening and closing valve 66 and opening and closing valve 73 to opening and closing valve 76 are in a closed state. Furthermore, the operations of electrodes 12 of electrolytic tank 11b, acidic electrolytic water circulation pump 24, and alkaline electrolytic water circulation pump 25 are also stopped.

As illustrated in Fig. 6, in the water-softening treatment of water-softening device 1b, the raw water to be supplied is supplied from inlet port 2 to flow path 30, first water-softening tank 4a, flow path 31, first neutralization tank 5a, flow path 32, second water-softening tank 4b, flow path 33, and second neutralization tank 5b in this order in the same flow path as water-softening device 1. In the raw water, the hardness components in the raw water are adsorbed in water-softening tank 4, and the raw water becomes acidic soft water and flows into neutralization tank 5. The acidic soft water becomes neutralized soft water when hydrogen ions is adsorbed in neutralization tank 5. The neutralized soft water having reduced hardness components as compared with the raw water is distributed through flow path 34 and is taken out of water-softening device 1b from water intake port 7.

Water-softening device 1b executes the regeneration treatment in a case where a time zone specified by controller 20b is reached or in a case where the water-softening treatment exceeds a certain time.

<<Regeneration treatment>>

Next, an operation of regeneration device 8b of water-softening device 1b during the regeneration treatment will be sequentially described with reference to fields of "DURING WATER INJECTION" and "DURING REGENERATION" in Fig. 8.

First, as illustrated in Fig. 8, during water injection, opening and closing valve 51 and opening and closing valve 61 are open. As a result, water-softening device 1b introduces the raw water into acidic electrolytic water storage tank 26 from inlet port 2 via first collection flow path 45 by the pressure of the raw water. Furthermore, opening and closing valve 52 and the opening and closing valve 62 are open. Thereby, the raw water flowing in from inlet port 2 is introduced into alkaline electrolytic water storage tank 28 via second collection flow path 46 after passing through first water-softening tank 4a. At this time, opening and closing valve 53 to opening and closing valve 55, opening and closing valve 63 to opening and closing valve 66, and opening and closing valve 73 to opening and closing valve 76 are closed. Predetermined amounts of water are stored in acidic electrolytic water storage tank 26 and alkaline electrolytic water storage tank 28 in accordance with flow rates of first circulation flow path 40c and second circulation flow path 40d, respectively, and thus, regeneration device 8b can secure the amount of water during regeneration.

Subsequently, during regeneration, when opening and closing valve 51 to opening and closing valve 55, and opening and closing valve 75 and opening and closing valve 76 are closed and opening and closing valve 61 to opening and closing valve 66 and opening and closing valve 73 and opening and closing valve 74 are open, first circulation flow path 40c and second circulation flow path 40d are formed as illustrated in Fig. 7.

When electrode 12a of electrolytic tank 11b and acidic electrolytic water circulation pump 24 are operated in first circulation flow path 40c, the acidic electrolytic water generated by electrode 12a is distributed through first supply flow path 41, is fed into second water-softening tank 4b, and is distributed through second weakly acidic cation exchange resin 9b provided inside. The acidic electrolytic water distributed through second water-softening tank 4b is circulated through first bypass flow path 43, is fed into first water-softening tank 4a, and is circulated through first weakly acidic cation exchange resin 9a provided inside. That is, the acidic electrolytic water is passed to first weakly acidic cation exchange resin 9a and second weakly acidic cation exchange resin 9b, and thus, the cations (hardness components) adsorbed on first weakly acidic cation exchange resin 9a and second weakly acidic cation exchange resin 9b cause the ion exchange reaction with the hydrogen ions contained in the acidic electrolytic water. As a result, first weakly acidic cation exchange resin 9a and second weakly acidic cation exchange resin 9b are regenerated. Thereafter, the acidic electrolytic water distributed through first weakly acidic cation exchange resin 9a contains the cations and flows into first collection flow path 45. That is, the acidic electrolytic water containing the cations distributed through first weakly acidic cation exchange resin 9a and second weakly acidic cation exchange resin 9b is collected into acidic electrolytic water storage tank 26 via first bypass flow path 43 and first collection flow path 45.

On the other hand, when electrode 12b of the electrolytic tank 11b and alkaline electrolytic water circulation pump 25 are operated in second circulation flow path 40d, the alkaline electrolytic water generated by electrode 12b is fed into second neutralization tank 5b through second supply flow path 42, and is distributed through second weakly basic anion exchange resin 10b provided inside. The alkaline electrolytic water distributed through second neutralization tank 5b is distributed through second bypass flow path 44, is fed into first neutralization tank 5a, and is distributed through first weakly basic anion exchange resin 10a provided inside. That is, the alkaline electrolytic water is passed to first weakly basic anion exchange resin 10a and second weakly basic anion exchange resin 10b, and thus, the anions adsorbed on first weakly basic anion exchange resin 10a and second weakly basic anion exchange resin 10b cause the ion exchange reaction with the hydroxide ions contained in the alkaline electrolytic water. As a result, first weakly basic anion exchange resin 10a and second weakly basic anion exchange resin 10b are regenerated. Thereafter, the alkaline electrolytic water distributed through second weakly basic anion exchange resin 10b contains the anions and flows into second collection flow path 46. That is, the alkaline electrolytic water containing the anions distributed through first weakly basic anion exchange resin 10a and second weakly basic anion exchange resin 10b is collected into alkaline electrolytic water storage tank 28 via second bypass flow path 44 and second collection flow path 46.

As described above, first circulation flow path 40c replaces the hydrogen ions of the acidic electrolytic water with the hardness component ions of second weakly acidic cation exchange resin 9b and first weakly acidic cation exchange resin 9a. The replaced hardness component ions are collected into acidic electrolytic water storage tank 26. Furthermore, second circulation flow path 40d replaces the hydroxide ions of the alkaline electrolytic water with the anions of second weakly basic anion exchange resin 10b and first weakly basic anion exchange resin 10a. The replaced anions are collected into alkaline electrolytic water storage tank 28.

The acidic electrolytic water containing the hardness component ions collected into acidic electrolytic water storage tank 26 is fed to electrode 12a side of electrolytic tank 11b by acidic electrolytic water circulation pump 24. Furthermore, the alkaline electrolytic water containing the anions collected into alkaline electrolytic water storage tank 28 is fed to electrode 12b side of electrolytic tank 11b by alkaline electrolytic water circulation pump 25. The acidic electrolytic water and the alkaline electrolytic water are electrolyzed again in electrolytic tank 11b to generate the hydrogen ions and the hydroxide ions, respectively. Here, the electrolytic waters (acidic electrolytic water and alkaline electrolytic water) electrolyzed again in electrolytic tank 11b are used for regeneration of weakly acidic cation exchange resin 9 and regeneration of weakly basic anion exchange resin 10, respectively. At this time, some hardness component ions on electrode 12a side are attracted to electrode 12b, while some anions on electrode 12b side are attracted to electrode 12a. Accordingly, on electrode 12b side, the attracted hardness component ions react with the hydroxide ions and the like in the alkaline electrolytic water, and are precipitated as the solid. For example, in a case where the hardness components in the acidic electrolytic water is calcium ions, calcium hydroxide is generated by the alkaline electrolytic water, or calcium carbonate is generated from bond between calcium ions and carbonate ions present in water. Thus, in water-softening device 1b, it is possible to suppress flowing of acidic electrolytic water containing a large amount of hydrogen ions and a small amount of hardness component ions into water-softening tank 4 and re-adsorption of the hardness components to weakly acidic cation exchange resin 9 in water-softening tank 4. Furthermore, in water-softening device 1b, it is possible to suppress flowing of alkaline electrolytic water containing a large amount of hydroxide ions and a small amount of other anions contained in the raw water into neutralization tank 5 and re-adsorption of other anions contained in the raw water to the weakly basic anion exchange resin 10 in neutralization tank 5. Accordingly, decreases in regeneration treatment efficiencies of water-softening tank 4 and neutralization tank 5 can be suppressed, and a regeneration time can be shortened.

Thereafter, the solid generated by the reaction when the alkaline electrolytic water is distributed from second ejection port 38 to filtration unit 15 is removed, and the alkaline electrolytic water is passed to second neutralization tank 5b again via second supply flow path 42. Furthermore, the acidic electrolytic water is passed from first ejection port 36 to second water-softening tank 4b again via first supply flow path 41.

In water-softening device 1b, when the regeneration treatment is completed, the operations of electrodes 12, acidic electrolytic water circulation pump 24, and alkaline electrolytic water circulation pump 25 are stopped. Furthermore, the water-softening device proceeds to the wastewater treatment by opening opening and closing valve 75 and opening and closing valve 76. Note that, the completion of the regeneration treatment may be set to a certain time from the start of the regeneration treatment (the start of the operation of electrodes 12).

<<Wastewater treatment>>

In water-softening device 1b, when the regeneration treatment is completed, the water-softening device proceeds to the wastewater treatment. Here, the wastewater treatment is a treatment for discharging the acidic electrolytic water and the alkaline electrolytic water remaining in circulation flow path 40.

Next, an operation of water-softening device 1b during wastewater treatment will be described with reference to a field of "DURING DISCHARGE" in Fig. 8.

As illustrated in Fig. 8, in water-softening device 1b, in the wastewater treatment (during discharge), opening and closing valve 51 to opening and closing valve 55 are closed, and opening and closing valve 61 to opening and closing valve 66, and opening and closing valve 73 to opening and closing valve 76 are open.

As a result, the acidic electrolytic water remaining in first circulation flow path 40c can flow into acidic electrolytic water storage tank 26. Furthermore, the alkaline electrolytic water remaining in second circulation flow path 40d can flow into alkaline electrolytic water storage tank 28.

Subsequently, when opening and closing valve 75 is open, the electrolytic water in acidic electrolytic water storage tank 26 can be discharged to the outside of the device by the action of air bleed valve 27. Furthermore, when opening and closing valve 76 is open, the alkaline electrolytic water in alkaline electrolytic water storage tank 28 can be discharged to the outside of the device by the action of air bleed valve 29.

The wastewater treatment is performed, and thus, it is possible to prevent the acidic electrolytic water and the alkaline electrolytic water remaining in circulation flow path 40 from mixing with the raw water flowing in from inlet port 2 and being discharged from water intake port 7 when the water-softening treatment is resumed.

Then, in water-softening device 1b, when the wastewater treatment is completed, the water-softening device proceeds to the water-softening treatment by closing opening and closing valve 61 to opening and closing valve 66 and opening and closing valve 73 to opening and closing valve 76 and opening opening and closing valve 51 to opening and closing valve 55. Note that, the completion of the wastewater treatment may be set at the time when a certain time has elapsed from the start of the wastewater treatment.

As described above, in water-softening device 1b, the water-softening treatment, the regeneration treatment, and the wastewater treatment are repeatedly executed.

«Calculation of hardness of soft water»

A method for calculating the hardness of the soft water in water-softening device 1b will be described.

Water-softening device 1b calculates the hardness of the soft water during the water-softening treatment. First, soft water detector 6a detects the electrical conductivity of the soft water distributing through flow path 34. The detected electrical conductivity of the soft water is transmitted to determination unit 22. Furthermore, storage 23b stores the reference electrical conductivity, and transmits the reference electrical conductivity to determination unit 22.

Determination unit 22 compares the electrical conductivity of the soft water input from soft water detector 6a with the reference electrical conductivity input from storage 23b, and determines that the period until the electrical conductivity of the soft water reaches the reference electrical conductivity is the first period and the period after the electrical conductivity reaches the reference electrical conductivity is the second period.

In a case where it is determined as the first period, third electrical conductivity calculator 19e calculates the third electrical conductivity based on the amount of passed water at the current point in time, the first coefficient input from first coefficient calculator 19c, and the second coefficient input from second coefficient calculator 19d, and outputs the third electrical conductivity to calculator 19b.

Subsequently, calculator 19b calculates hardness by multiplying a value calculated by subtraction by a predetermined value based on the electrical conductivity of the soft water detected by soft water detector 6a and the third electrical conductivity. The hardness calculated by calculator 19b is transmitted to display 21 and is displayed on display 21.

In a case where it is determined as the second period, calculator 19b calculates hardness by multiplying a value calculated by subtraction by a predetermined value based on the electrical conductivity of the soft water detected by soft water detector 6a and the reference electrical conductivity output from determination unit 22 or storage 23b. The hardness calculated by calculator 19b is transmitted to display 21 and is displayed on display 21.

From above, in accordance with water-softening device 1b according to the third exemplary embodiment, the following effects can be obtained.

Water-softening device 1b includes water-softening tank 4, neutralization tank 5, soft water detector 6a, determination unit 22, storage 23b, first coefficient calculator 19c, second coefficient calculator 19d, third electrical conductivity calculator 19e, calculator 19b, and display 21. Water-softening tank 4 softens the raw water containing the hardness components with weakly acidic cation exchange resin 9. Neutralization tank 5 neutralizes the pH of the soft water having passed through water-softening tank 4 with weakly basic anion exchange resin 10. Soft water detector 6a detects the electrical conductivity of the soft water having passed through water-softening tank 4 and neutralization tank 5. Determination unit 22 compares the electrical conductivity of the soft water detected by soft water detector 6a with the reference electrical conductivity, and determines that the period until the electrical conductivity of the soft water reaches the reference electrical conductivity is the first period and the period after the electrical conductivity of the soft water reaches the reference electrical conductivity is the second period. Storage 23b stores, as the reference electrical conductivity, the electrical conductivity of the soft water when the amount of change in electrical conductivity of the soft water with respect to the amount of passed raw water is small. Furthermore, storage 23b stores the electrical conductivity corresponding to the hardness of the neutralized soft water, the electrical conductivity of the soft water, and a soft water target ion concentration that is an ion concentration other than the hardness components in the soft water. First coefficient calculator 19c and second coefficient calculator 19d calculate the first coefficient and the second coefficient based on the electrical conductivity corresponding to the hardness of the neutralized soft water output from storage 23b, the electrical conductivity of the soft water, and the soft water target ion concentration that is the ion concentration other than the hardness components in the soft water. Third electrical conductivity calculator 19e calculates the third electrical conductivity based on the first coefficient calculated by first coefficient calculator 19c and the second coefficient calculated by second coefficient calculator 19d. Calculator 19b calculates the hardness components in the soft water based on the determination result of determination unit 22. In a case where the determination result is the first period, the hardness components in the soft water are calculated and output based on the electrical conductivity of the soft water output by soft water detector 6a and the third electrical conductivity output from third electrical conductivity calculator 19e. In a case where the determination result is the second period, the hardness components in the soft water are calculated and output based on the electrical conductivity of the soft water output from soft water detector 6a and the reference electrical conductivity output from storage 23b. Display 21 gives a notification about the hardness of the soft water calculated by calculator 19b. Water-softening device 1b is configured such that the raw water is distributed through water-softening tank 4, neutralization tank 5, and soft water detector 6a in this order.

In accordance with such a configuration, a hardness value corresponding to the hardness components in the soft water can be calculated by predicting a rate of increase in electrical conductivity corresponding to the ions other than the hardness components in the soft water in the first period. Specifically, in water-softening device 1a of the second exemplary embodiment, the hardness in the soft water is regarded as 0 in the case of the first period until the electrical conductivity of the soft water reaches the reference electrical conductivity. However, unlike the second exemplary embodiment, in water-softening device 1b, in the case of the first period until the electrical conductivity of the soft water reaches the reference electrical conductivity, the hardness components of the soft water can be calculated by predicting a change behavior of the third electrical conductivity corresponding to the ions other than the hardness components in the soft water based on the first coefficient and the second coefficient and subtracting the predicted third electrical conductivity from the electrical conductivity of the soft water. Accordingly, the concentration change of the entire hardness components including the first period and the second period of the water-softening treatment can be calculated by calculator 19b and can be displayed on display 21. That is, in the first period, since the hardness change of the soft water obtained from water intake port 7 can also be calculated, the hardness of the soft water can be known more accurately.

As above, the present disclosure has been described based on the exemplary embodiments. It is understood by those skilled in the art that these exemplary embodiments are merely examples, that the components or the treatment processes of those can be combined as various modifications, and that such modifications also fall within the scope of the present disclosure.

In water-softening device 1 according to the first exemplary embodiment, instead of measuring the electrical conductivity in raw water detector 3 and acquiring the first electrical conductivity corresponding to the ions other than the hardness components in the raw water in acquisition unit 17, the amount of ion components other than the hardness components may be measured by using other means, and the electrical conductivity corresponding to the ions other than the hardness components obtained from the measured amount of ion components may be acquired as the first electrical conductivity. Examples of the other means include measurement by a device such as ion chromatography, a pack test, and the like, and as long as the measurement means has higher accuracy in measurement of the amount of ion components as compared with the electrical conductivity measurement, the hardness components in the soft water can be calculated more accurately.

Furthermore, in water-softening device 1, water-softening device 1a, and water-softening device 1b according to the first exemplary embodiment to the third exemplary embodiment, the number of water-softening tanks 4 and the number of neutralization tanks 5 are two, respectively. However, the number of water-softening tanks 4 and the number of neutralization tanks 5 are not limited thereto. For example, each of the number of water-softening tanks and the number of neutralization tanks may be one, or may be three or more. Basically, in a case where a total amount of weakly acidic cation exchange resin 9 and weakly basic anion exchange resin 10 used in water-softening device 1, water-softening device 1a, and water-softening device 1b is constant, as the numbers of divisions of water-softening tank 4 and neutralization tank 5 are increased, the number of times of alternately performing water-softening and neutralization during the water-softening treatment increases, and the water-softening performance can be further improved.

Furthermore, in water-softening device 1, water-softening device 1a, and water-softening device 1b according to the first exemplary embodiment to the third exemplary embodiment, the flow path lengths and the flow path sectional areas of first water-softening tank 4a and second water-softening tank 4b are equal to each other, but the present disclosure is not limited thereto. For example, the flow path lengths or the flow path sectional areas may be different, or both the flow path lengths and the flow path sectional areas may be different. Even in these cases, the same effects as the first exemplary embodiment can be obtained. Note that, the same applies to first neutralization tank 5a and second neutralization tank 5b.

Furthermore, in water-softening device 1, water-softening device 1a, and water-softening device 1b according to the first exemplary embodiment to the third exemplary embodiment, the volumes of first weakly acidic cation exchange resin 9a filled in first water-softening tank 4a and second weakly acidic cation exchange resin 9b filled in second water-softening tank 4b are the same, but the present disclosure is not limited thereto. For example, the volumes of first weakly acidic cation exchange resin 9a and second weakly acidic cation exchange resin 9b may be different from each other, or different types of weakly acidic cation exchange resins 9 may be used. As a result, the water-softening performance can be adjusted, and water-softening device 1 having water-softening performance suitable for the purpose can be obtained. Note that, the same applies to first neutralization tank 5a and second neutralization tank 5b.

Furthermore, in water-softening device 1, water-softening device 1a, and water-softening device 1b according to the first exemplary embodiment to the third exemplary embodiment, the acidic electrolytic water is distributed through second water-softening tank 4b and first water-softening tank 4a in this order, but the present disclosure is not limited thereto. For example, the acidic electrolytic water may be distributed through first water-softening tank 4a and second water-softening tank 4b in this order. Moreover, in water-softening device 1 according to the first exemplary embodiment, the acidic electrolytic water is distributed from the downstream side of water-softening tank 4, but may be distributed from the upstream side. Even in this case, the regeneration treatment of water-softening tank 4 can be performed.

Furthermore, in water-softening device 1, water-softening device 1a, and water-softening device 1b according to the first exemplary embodiment to the third exemplary embodiment, the reproduction treatment is executed in a case where the time zone specified by controller 20 or controller 20b is reached or in a case where the water-softening treatment exceeds a certain time, but the present disclosure is not limited thereto. For example, in a case where the amount of hardness components in the soft water calculated by calculator 19 or calculator 19b exceeds a preset reference value, controller 20 or controller 20b may operate electrolytic tank 11 or electrolytic tank 11b to execute the regeneration treatment. As a result, the execution of the regeneration treatment can be determined based on the amount of hardness components in the soft water. Thus, the state of weakly acidic cation exchange resin 9 in water-softening tank 4 can be determined more accurately, and weakly acidic cation exchange resin 9 and weakly basic anion exchange resin 10 can be regenerated at an appropriate timing.

INDUSTRIAL APPLICABILITY

The water-softening device according to the present disclosure can be applied to a point-of-use (POU) water purification system, a point-of-entry (POE) water purification system, and the like.

REFERENCE MARKS IN THE DRAWINGS

    1: water-softening device
    1a: water-softening device
    1b: water-softening device
    2: inlet port
    3: raw water detector
    4: water-softening tank
    4a: first water-softening tank
    4b: second water-softening tank
    5: neutralization tank
    5a: first neutralization tank
    5b: second neutralization tank
    6, 6a: soft water detector
    7: water intake port
    8, 8b: regeneration device
    9: weakly acidic cation exchange resin
    9a: first weakly acidic cation exchange resin
    9b: second weakly acidic cation exchange resin

10: weakly basic anion exchange resin
10a: first weakly basic anion exchange resin
10b: second weakly basic anion exchange resin
11, 11b: electrolytic tank
12: electrodes
12a: electrode
12b: electrode
13: treatment tank
14: water pump
15: filtration unit
16: air bleed valve
17: acquisition unit
18: correction unit
19, 19a, 19b: calculator
19c: first coefficient calculator
19d: second coefficient calculator
19e: third electrical conductivity calculator
20, 20b: controller
21: display
22: determination unit
23, 23b: storage
24: acidic electrolytic water circulation pump
25: alkaline electrolytic water circulation pump
26: acidic electrolytic water storage tank
27: air bleed valve
28: alkaline electrolytic water storage tank
29: air bleed valve
30, 31, 32, 33, 34: flow path
35: first water intake port
36: first ejection port
37: second water intake port
38: second ejection port
40: circulation flow path
40a, 40c: first circulation flow path
40b, 40d: second circulation flow path
41: first supply flow path
42: second supply flow path
43: first bypass flow path
44: second bypass flow path
45: first collection flow path
46: second collection flow path
47: first water flow path
48: second water flow path
50: water flow path
51, 52, 53, 54, 55: opening and closing valve
61, 62, 63, 64, 65, 66: opening and closing valve
71, 72, 73, 74, 75, 76: opening and closing valve
80: diaphragm
81: anode chamber
82: cathode chamber

**Claims**

1. A water-softening device comprising:

a water-softening tank that performs a water-softening treatment on raw water containing a hardness component with a weakly acidic cation exchange resin to generate acidic soft water;

a neutralization tank that neutralizes a pH of the acidic soft water generated by passing through the water-softening tank with a weakly basic anion exchange resin to generate neutralized soft water;

a soft water detector that detects an electrical conductivity of the neutralized soft water generated by passing through the neutralization tank;

an acquisition unit that acquires a first electrical conductivity corresponding to an ion other than the hardness component in the raw water;

a correction unit that corrects the electrical conductivity of the neutralized soft water based on the first electrical conductivity acquired by the acquisition unit to output a second electrical conductivity; and

a calculator that calculates hardness component information based on the second electrical conductivity.

2. The water-softening device according to Claim 1, wherein the correction unit outputs the second electrical conductivity based on a difference between the electrical conductivity of the neutralized soft water and the first electrical conductivity in a case where the electrical conductivity of the neutralized soft water is more than or equal to the first electrical conductivity.

3. The water-softening device according to Claim 1 or 2, wherein

the hardness component information includes a hardness component concentration of the neutralized soft water, and

the calculator sets the hardness component concentration as 0 in a case where the electrical conductivity of the neutralized soft water is less than the first electrical conductivity.

4. The water-softening device according to any one of Claims 1 to 3, further comprising
a display that displays the hardness component information.

5. The water-softening device according to any one of Claims 1 to 4, further comprising:

an electrolytic tank that generates acidic electrolytic water and alkaline electrolytic water; and
a controller that controls an operation of the electrolytic tank,
wherein the controller operates the electrolytic tank based on the hardness component information output from the calculator in a case where the hardness component information exceeds a reference value.

6. The water-softening device according to any one of Claims 1 to 5, further comprising
a raw water detector that measures an electrical conductivity of the raw water.

7. The water-softening device according to any one of Claims 1 to 5, wherein the first electrical conductivity is a value determined in advance by water quality of the raw water.

8. A water-softening device comprising:

a water-softening tank that performs a water-softening treatment on raw water containing a hardness component with a weakly acidic cation exchange resin to generate acidic soft water;
a neutralization tank that neutralizes a pH of the acidic soft water having passed through the water-softening tank with a weakly basic anion exchange resin to generate neutralized soft water;
a soft water detector that detects an electrical conductivity of the neutralized soft water generated by passing through the neutralization tank;
a determination unit that determines a first period until the electrical conductivity of the neutralized soft water reaches a first predetermined value and a second period after the electrical conductivity of the neutralized soft water reaches the first predetermined value; and
a calculator that calculates hardness component information based on the electrical conductivity of the neutralized soft water,
wherein the determination unit includes a storage that stores, as a reference electrical conductivity, the electrical conductivity of the neutralized soft water at an initial period of the second period.

9. The water-softening device according to Claim 8, wherein

the hardness component information includes a hardness component concentration of the neutralized soft water, and

the calculator sets the hardness component concentration as 0 in the first period.

10. The water-softening device according to Claim 8 or 9, wherein the calculator calculates the hardness component concentration based on a difference between the electrical conductivity of the neutralized soft water and the reference electrical conductivity in the second period.

11. The water-softening device according to Claim 8, wherein

the storage stores the electrical conductivity corresponding to hardness of the neutralized soft water, the electrical conductivity of the neutralized soft water, and a soft water target ion concentration that is an ion concentration other than the hardness component contained in the neutralized soft water, and
the calculator includes:
a first coefficient calculator that calculates the soft water target ion concentration contained in the neutralized soft water in the first period and a first coefficient corresponding to a ratio of the electrical conductivity,
a second coefficient calculator that calculates a second coefficient corresponding to a change rate of the soft water target ion concentration contained in the neutralized soft water corresponding to a passed amount of the raw water, and
a third electrical conductivity calculator that calculates a third electrical conductivity corresponding to an ion other than the hardness component in the raw water.

12. The water-softening device according to Claim 11, wherein

the third electrical conductivity calculator calculates the third electrical conductivity based on the first coefficient and the second coefficient, and
the calculator calculates the hardness component concentration based on a difference between the electrical conductivity of the neutralized soft water and the third electrical conductivity in the first period.

13. The water-softening device according to Claim 11 or 12, wherein the calculator calculates the hardness component concentration based on a difference between the electrical conductivity of the neutralized soft water and the reference electrical conductivity in the second period.

# FIG. 1

# FIG. 2

FIRST CIRCULATION
FLOW PATH 40a

SECOND CIRCULATION
FLOW PATH 40b

# FIG. 3

| | DURING WATER-SOFTENING | DURING WATER INJECTION | DURING REGENERATION | DURING DISCHARGE |
|---|---|---|---|---|
| RAW WATER DETECTOR 3 | ON | | | |
| SOFT WATER DETECTOR 6 | ON | | | |
| OPENING AND CLOSING VALVE 51 | ON | ON | | |
| OPENING AND CLOSING VALVE 52 | ON | | | |
| OPENING AND CLOSING VALVE 53 | ON | | | |
| OPENING AND CLOSING VALVE 54 | ON | | | |
| OPENING AND CLOSING VALVE 55 | ON | | | |
| OPENING AND CLOSING VALVE 61 | | ON | ON | ON |
| OPENING AND CLOSING VALVE 62 | | | ON | ON |
| OPENING AND CLOSING VALVE 63 | | | ON | ON |
| OPENING AND CLOSING VALVE 64 | | | ON | ON |
| OPENING AND CLOSING VALVE 65 | | | ON | ON |
| OPENING AND CLOSING VALVE 66 | | | ON | ON |
| OPENING AND CLOSING VALVE 71 | | | ON | ON |
| OPENING AND CLOSING VALVE 72 | | | | ON |
| ELECTRODES 12 | | | ON | |
| WATER PUMP 14 | | | ON | |

# FIG. 4

...

# FIG. 5

Graph axes:
- Y-axis: ELECTRICAL CONDUCTIVITY OF SOFT WATER, with REFERENCE ELECTRICAL CONDUCTIVITY marked
- X-axis: TOTAL AMOUNT OF PASSED RAW WATER
- FIRST PERIOD (SECTION A, SECTION B), SECOND PERIOD (SECTION C)

# FIG. 6

# FIG. 7

FIRST CIRCULATION
FLOW PATH 40c

SECOND CIRCULATION
FLOW PATH 40d

# FIG. 8

| | DURING WATER-SOFTENING | DURING WATER INJECTION | DURING REGENERATION | DURING DISCHARGE |
|---|---|---|---|---|
| SOFT WATER DETECTOR 6a | ON | | | |
| OPENING AND CLOSING VALVE 51 | ON | ON | | |
| OPENING AND CLOSING VALVE 52 | ON | ON | | |
| OPENING AND CLOSING VALVE 53 | ON | | | |
| OPENING AND CLOSING VALVE 54 | ON | | | |
| OPENING AND CLOSING VALVE 55 | ON | | | |
| OPENING AND CLOSING VALVE 61 | | ON | ON | ON |
| OPENING AND CLOSING VALVE 62 | | ON | ON | ON |
| OPENING AND CLOSING VALVE 63 | | | ON | ON |
| OPENING AND CLOSING VALVE 64 | | | ON | ON |
| OPENING AND CLOSING VALVE 65 | | | ON | ON |
| OPENING AND CLOSING VALVE 66 | | | ON | ON |
| OPENING AND CLOSING VALVE 73 | | | ON | ON |
| OPENING AND CLOSING VALVE 74 | | | ON | ON |
| OPENING AND CLOSING VALVE 75 | | | | ON |
| OPENING AND CLOSING VALVE 76 | | | | ON |
| ELECTRODES 12 | | | ON | |
| ACIDIC ELECTROLYTIC WATER CIRCULATION PUMP 24 | | | ON | |
| ALKALINE ELECTROLYTIC WATER CIRCULATION PUMP 25 | | | ON | |

# FIG. 9

1b

WATER-SOFTENING DEVICE

6a

SOFT WATER DETECTOR

20b

CONTROLLER

22

DETERMINATION UNIT

23b

STORAGE

FIRST COEFFICIENT CALCULATOR

SECOND COEFFICIENT CALCULATOR

19c

19d

19b

THIRD ELECTRICAL CONDUCTIVITY CALCULATOR

CALCULATOR

19e

11

24

25

21

ELECTROLYTIC TANK

ACIDIC ELECTROLYTIC WATER CIRCULATION PUMP

ALKALINE ELECTROLYTIC WATER CIRCULATION PUMP

DISPLAY

# FIG. 10

# FIG. 11

(a)

SODIUM CONCENTRATION

FIRST PERIOD — SECOND PERIOD

SECTION D — SECTION E — SECTION F

SODIUM CONCENTRATION IN RAW WATER

0

0 — TOTAL AMOUNT OF PASSED RAW WATER

(b)

HARDNESS COMPONENT CONCENTRATION

FIRST PERIOD — SECOND PERIOD

SECTION D — SECTION E — SECTION F

RAW WATER HARDNESS COMPONENT CONCENTRATION

0

0 — TOTAL AMOUNT OF PASSED RAW WATER

## INTERNATIONAL SEARCH REPORT

| International application No. |
|---|
| **PCT/JP2023/001269** |

### A. CLASSIFICATION OF SUBJECT MATTER

***B01J 39/07***(2017.01)i; ***B01J 41/07***(2017.01)i; ***B01J 47/14***(2017.01)i; ***B01J 49/53***(2017.01)i; ***B01J 49/57***(2017.01)i; ***C02F 1/42***(2023.01)i; ***C02F 1/461***(2023.01)i
FI:　C02F1/42 A; C02F1/461 A; B01J39/07; B01J41/07; B01J47/14; B01J49/53; B01J49/57; C02F1/42 B; C02F1/461 Z

According to International Patent Classification (IPC) or to both national classification and IPC

### B. FIELDS SEARCHED

Minimum documentation searched (classification system followed by classification symbols)

　　B01J39/07; B01J41/07; B01J47/14; B01J49/53; B01J49/57; C02F1/42; C02F1/461

Documentation searched other than minimum documentation to the extent that such documents are included in the fields searched

　　Published examined utility model applications of Japan 1922-1996
　　Published unexamined utility model applications of Japan 1971-2023
　　Registered utility model specifications of Japan 1996-2023
　　Published registered utility model applications of Japan 1994-2023

Electronic data base consulted during the international search (name of data base and, where practicable, search terms used)

　　JSTPlus/JMEDPlus/JST7580 (JDreamIII); Japio-GPG/FX

### C. DOCUMENTS CONSIDERED TO BE RELEVANT

| Category* | Citation of document, with indication, where appropriate, of the relevant passages | Relevant to claim No. |
|---|---|---|
| X | WO 2022/004180 A1 (PANASONIC IP MAN CO LTD) 06 January 2022 (2022-01-06) paragraphs [0001]-[0416], fig. 1-17 | 1-10 |
| A | WO 2021/085163 A1 (PANASONIC IP MAN CO LTD) 06 May 2021 (2021-05-06) claims 1-4, fig. 1-3 | 1-13 |
| A | WO 2021/024938 A1 (PANASONIC IP MAN CO LTD) 11 February 2021 (2021-02-11) claims 1-4, fig. 1-24 | 1-13 |
| A | JP 2001-170628 A (MATSUSHITA ELECTRIC IND CO LTD) 26 June 2001 (2001-06-26) claims 1-4, fig. 1-2 | 1-13 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 February 2023** | **21 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
**Information on patent family members**

International application No.

**PCT/JP2023/001269**

| Patent document cited in search report | | | Publication date (day/month/year) | Patent family member(s) | | | Publication date (day/month/year) |
|---|---|---|---|---|---|---|---|
| WO | 2022/004180 | A1 | 06 January 2022 | JP | 2022-13569 | A | |
| | | | | paragraphs [0001]-[0105], fig. 1-3 | | | |
| | | | | JP | 2022-26486 | A | |
| | | | | JP | 2022-34116 | A | |
| | | | | JP | 2022-57057 | A | |
| WO | 2021/085163 | A1 | 06 May 2021 | (Family: none) | | | |
| WO | 2021/024938 | A1 | 11 February 2021 | US | 2022/0274100 | A1 | |
| | | | | claims 1-4, fig. 1-24 | | | |
| | | | | CN | 114206784 | A | |
| JP | 2001-170628 | A | 26 June 2001 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011030973 A